# EUROPEAN PATENT APPLICATION

(11) **EP 4 391 404 A1**
(43) Date of publication of application: **26.06.2024**
(21) Application number: 21953712.3
(22) Date of filing: 18.08.2021
(51) Int. Cl.: H04B 7/0452

(54) **WIRELESS COMMUNICATION METHOD, FIRST TERMINAL DEVICE, AND SECOND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Shichang, Dongguan, Guangdong 523860 (CN)
(74) Representative: Ipside
(86) International application number: PCT/CN2021/113219
(87) International publication number: WO 2023/019464

(57) **Abstract**

Embodiments of the present application provide a wireless communication method, a first terminal device, and a second terminal device. The method comprises: respectively receiving a plurality of channel state information reference signals (CSI-RSs) by means of a plurality of spatial domain receive filters; performing measurement on the plurality of CSI-RSs to obtain measurement results of the plurality of CSI-RSs; and on the basis of the measurement results of the plurality of CSI-RSs, determining, from the plurality of spatial domain receive filters, a target spatial domain receive filter used for a first terminal device to receive sidelink data. According to the method, it can be ensured that the target spatial domain receive filter used by the first terminal device is aligned with a spatial domain sending filter used by a second terminal device, thereby maximizing the signal gain and improving the transmission performance.

## Description

### TECHNICAL FIELD

Embodiments of the present disclosure relate to the field of communications, and more particularly to a wireless communication method, a first terminal device and a second terminal device.

### BACKGROUND

The design goal of New Radio (NR)/5-Generation (5G) system includes high-frequency large-bandwidth communication, such as a frequency band above 6GHz. However, when the operating frequency of the terminal device becomes higher, the path loss in the transmission process will increase, which will affect the coverage ability of the high-frequency system. In order to effectively ensure the coverage of high band NR system, a shaped beam with greater gain may be formed in analog beam-forming mode according to massive multiple-input multiple-output (Massive MIMO), thus overcoming propagation loss and ensuring system coverage. Specifically, a cell is fully covered through Multi-beam, that is, each beam covers a small range, and the effect of covering the whole cell by multiple beams is realized by sweeping in time. In the specific transmission process, a network device may assist a terminal side to determine relevant information of transmission beams of a network side or relevant information of receiving beams corresponding to the terminal side through beam indication information.

However, if high-frequency large-bandwidth communication is introduced into a NR sidelink (SL) system, since both a receiving terminal and a sending terminal perform sidelink communication based on multi-beam, the receiving beams of the receiving terminal and the transmission beams of the sending terminal may be misaligned, which reduces the signal gain and transmission performance.

### SUMMARY

Embodiments of the present disclosure provide a wireless communication method, a first terminal device and a second terminal device, which can ensure that a target spatial domain receiving filter used by the first terminal device is aligned with a spatial domain transmission filter used by the second terminal device, thereby maximizing the signal gain and improving the transmission performance.

In a first aspect, the present disclosure provides a wireless communication method, which includes the following operations:
multiple channel state information reference signals (CSI-RSs) are received using multiple spatial domain receiving filters respectively;
the multiple CSI-RSs are measured to obtain measurement results of the multiple CSI-RSs; and
based on the measurement results of the multiple CSI-RSs, a target spatial domain receiving filter for a first terminal device to receive sidelink data is determined from the multiple spatial domain receiving filters.

In a second aspect, the present disclosure provides a wireless communication method, which includes the following operations:
multiple channel state information reference signals (CSI-RSs) are sent to a first terminal device respectively using a same spatial domain transmission filter, where the multiple CSI-RSs are used for the first terminal device to determine a target spatial domain receiving filter for sidelink data reception from multiple spatial domain receiving filters.

In a third aspect, the present disclosure provides a first terminal device, which is used to perform the method in the above first aspect or various implementations thereof. In particular, the first terminal device includes function modules used to perform the method in the above first aspect or various implementations thereof.

In an implementation, the first terminal device includes a processing unit, which is used to perform functions related to information processing. For example, the processing unit may be a processor.

In an implementation, the first terminal device may include a sending unit and/or a receiving unit. The sending unit is used to perform functions related to sending, and the receiving unit is used to perform functions related to reception. For example, the sending unit may be a transmitter or a sender, and the receiving unit may be a receiver or a receptor. For another example, the first terminal device is a communication chip, the sending unit may be an input circuit or interface of the communication chip, and the sending unit may be an output circuit or interface of the communication chip.

In a fourth aspect, the present disclosure provides a second terminal device, which is used to perform the method in the above second aspect or various implementations thereof. In particular, the second terminal device includes function modules used to perform the method in the second aspect or various implementations thereof.

In an implementation, the second terminal device may include a processing unit, which is used to perform functions related to information processing. For example, the processing unit may be a processor.

In an implementation, the second terminal device may include a sending unit and/or a receiving unit. The sending unit is used to perform functions related to sending, and the receiving unit is used to perform functions related to reception. For example, the sending unit may be a transmitter or a sender, and the receiving unit may be a receiver or a receptor. For another example, the second terminal device is a communication chip, the receiving unit may be an input circuit or interface of the communication chip, and the sending unit may be an output circuit or interface of the communication chip.

In a fifth aspect, the present disclosure provides a first terminal device, which includes a processor and a memory. The memory is used to store a computer program, and the processor is used to invoke and run the computer program stored in the memory to perform the method in the above first aspect or various implementations thereof.

In an implementation, there are one or more processors and one or more memories.

In an implementation, the memory may be integrated with the processor, or the memory may be disposed separately from the processor.

In an implementation, the first terminal device further includes a transmitter (sender) and a receiver (receptor).

In a sixth aspect, the present disclosure provides a second terminal device, which includes a processor and a memory. The memory is used to store a computer program, and the processor is used to invoke and run the computer program stored in the memory to perform the method in the second aspect or various implementations thereof.

In an implementation, there are one or more processors and one or more memories.

In an implementation, the memory may be integrated with the processor, or the memory may be disposed separately from the processor.

In an implementation, the second terminal device further includes a transmitter (sender) and a receiver (receptor).

In a seventh aspect, the present disclosure provides a chip, which is used to implement the method in any of the first aspect and the second aspect or implementations thereof. Specifically, the chip includes: a processor, used to invoke and run a computer program from a memory, causing a device on which the chip is installed to perform the method in any of the first aspect and the second aspect or implementations thereof.

In an eighth aspect, the present disclosure provides a computer-readable storage medium, which is used to store a computer program that causes a computer to perform the method in any of the first aspect and the second aspect or implementations thereof.

In a ninth aspect, the present disclosure provides a computer program product, which includes computer program instructions that cause a computer to perform the method in any of the first aspect and the second aspect or implementations thereof.

In a tenth aspect, the present disclosure provides a computer program that, when run on a computer, causes the computer to perform the method in any of the first aspect and the second aspect or implementations thereof.

Based on the above solution, the first terminal device may determine, based on the measurement results of the multiple CSI-RSs and from the multiple spatial domain receiving filters, the target spatial domain receiving filter for the first terminal device to receive the sidelink data. On this basis, when the first terminal device receives, through the target spatial domain receiving filter, sidelink data sent by the second terminal device using a spatial domain transmission filter corresponding to the target spatial domain receiving filter, it can ensure that the target spatial domain receiving filter is aligned with the spatial domain transmission filter used by the second terminal device, thereby maximizing the signal gain and improving the transmission performance.

### BRIEF DESCRIPTION OF THE DRAWINGS

FIG. 1 to FIG. 7 are examples of scenarios according to the present disclosure.
FIG. 8 illustrates an example of a slot structure not including a PSFCH channel according to an embodiment of the present disclosure.
FIG. 9 illustrates an example of a slot structure including a PSFCH channel according to an embodiment of the present disclosure.
FIG. 10 is a schematic diagram of a non-analog beam according to an embodiment of the present disclosure.
FIG. 11 is a schematic diagram of an analog beam according to an embodiment of the present disclosure.
FIG. 12 is a schematic flowchart of a method for configuring a TCI state of PDSCH according to an embodiment of the present disclosure.
FIG. 13 is a schematic flowchart of a wireless communication method according to an embodiment of the present disclosure.
FIG. 14 is a schematic diagram for receiving multiple CSI-RSs based on first indication information according to an embodiment of the present disclosure.
FIG. 15 is a schematic diagram of a first terminal device receiving multiple CSI-RSs based on second indication information according to an embodiment of the present disclosure.
FIG. 16 is a schematic diagram of a first terminal device receiving multiple CSI-RSs on multiple transmission resources using multiple spatial domain receiving filters respectively according to an embodiment of the present disclosure.
FIG. 17 is another schematic flowchart of a wireless communication method according to an embodiment of the present disclosure.
FIG. 18 is a schematic block diagram of a first terminal device according to an embodiment of the present disclosure.
FIG. 19 is a schematic block diagram of a second terminal device according to an embodiment of the present disclosure.
FIG. 20 is a schematic block diagram of a communication device according to an embodiment of the present disclosure.
FIG. 21 is a schematic block diagram of a chip according to an embodiment of the present disclosure.

### DETAILED DESCRIPTION

The technical solutions in embodiments of the present disclosure will be described with reference to the accompanying drawings below.

Embodiments of the present disclosure may be applied to any terminal device-to-terminal device communication framework. For example, Vehicle to Vehicle (V2V), Vehicle to Everything (V2X), Device to Device (D2D), and so on. Herein, the terminal device of the present disclosure may be any device or equipment configured with a physical layer and a media access control layer, and the terminal device may also be referred to as an access terminal. For example, a user equipment (UE), a user unit, a user station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, a wireless local loop (WLL) station, a personal digital linear processing (personal digital assistant, PDA), a handheld device with wireless communication function, a computing device or other linear processing devices connected to a wireless modem, a vehicle-mounted device, a wearable device, and the like. Embodiments of the present disclosure are described by taking the vehicle terminal as an example, but are not limited thereto.

The technical solution of embodiments of the present disclosure may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a NR system, an evolution system of NR system, a LTE-based access to unlicensed spectrum (LTE-U) system, a NR-based access to unlicensed spectrum (NR-U) system, a non-terrestrial networks (NTN) system, a universal mobile telecommunication system (UMTS), a wireless local area networks (WLAN) system, a wireless fidelity (WiFi) system, 5G system or other communication systems, etc.

In general, traditional communication systems support a limited number of connections and are easy to implement. However, with the development of communication technology, mobile communication systems will not only support traditional communication, but also support, for example, D2D communication, Machine to Machine (M2M) communication, Machine Type Communication (MTC), V2V communication, or V2X communication, etc. Embodiments of the present disclosure may also be applied to these communication systems.

Optionally, the communication system of the present disclosure may be applied to a carrier aggregation (CA) scenario, a dual connectivity (DC) scenario, or a standalone (SA) network deployment scenario.

Optionally, the communication system of the present disclosure may be applied to an unlicensed spectrum, where the unlicensed spectrum may also be considered as a shared spectrum. Alternatively, the communication system of the present disclosure may also be applied to a licensed spectrum, where the licensed spectrum may also be considered as a non-shared spectrum.

Various embodiments are described in connection with a network device and a terminal device by embodiments of the present disclosure. The terminal device may also be referred to as a user equipment (UE), an access terminal, a user unit, a user station, a mobile station, a remote station, a remote terminal, a mobile device, a user terminal, a terminal, a wireless communication device, a user agent, or a user device, etc.

The terminal device may be a STATION (ST) in a WLAN, a cellular telephone, a cordless telephone, a SIP telephone, a WLL station, a PDA device, a handheld device with wireless communication function, a computing device or other processing devices connected to a wireless modem, a vehicle-mounted device, a wearable device, a terminal device in a next generation communication system such as an NR network, or a terminal device in a future evolved public land mobile network (PLMN) network, etc.

In the present disclosure, the terminal device may be deployed on land, including indoor or outdoor, hand-held, wearable or vehicle-mounted; may also be deployed on the water (such as ships, etc.); may also be deployed in the air (such as airplanes, balloons and satellites, etc.).

In the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home.

By way of example and not limitation, in the present disclosure, the terminal device may also be a wearable device. The wearable device may also be referred to as a wearable smart device, which is a general name of devices developed to be worn by applying wearable technology to intelligently design daily wear, such as glasses, gloves, watches, clothing and shoes, etc. The wearable device is a portable device that is worn directly on the body or integrated into the user's clothes or accessories. The wearable device is not only a hardware device, but also realizes powerful functions through software support, data interaction and cloud interaction. Generalized wearable smart devices include full-featured and large-sized devices that can realize complete or partial functions without relying on smart phones, such as smart watches or smart glasses, etc., and devices that only focus on certain application functions and need to be used in conjunction with other devices such as smart phones, such as various smart bracelets and smart jewelry for monitoring physical signs.

In the present disclosure, the network device may be a device for communicating with a mobile device. The network device may be an access point (AP) in a WLAN, a base transceiver station (BTS) in a GSM or CDMA, a base station (NodeB, NB) in a WCDMA, an evolved base station in a LTE (evolved node B, eNB or eNodeB), a relay station or an AP, a vehicle-mounted device, a wearable device, a network device or a base station (gNB) in an NR network, a network device in a future evolved PLMN network or a network device in an NTN network, etc.

By way of example and not limitation, in the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station set on land, water and the like.

In the present disclosure, the network device may provide services for a cell, and the terminal device communicates with the network device through the transmission resources (e.g., frequency domain resources, or spectrum resources) used by the cell. The cell may be a cell corresponding to the network device (e.g., a base station), and the cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-rate data transmission services.

It should be understood that the terms "system" and "network" are often used interchangeably in the present disclosure. The term "and/or" in the present disclosure is only an association relationship describing associated objects and represents that three relationships may exist. For example, A and/or B may represent three conditions: i.e., independent existence of A, existence of both A and B and independent existence of B. In addition, character "/" in the present disclosure usually represents that previous and next associated objects form an "or" relationship.

Terms used in implementations of the present disclosure are used only for explanation of specific embodiments of present disclosure and are not intended to be limiting. The terms "first", "second", "third", "fourth" and the like in the specification, the claims, and the accompanying drawings of the present disclosure are used to distinguish different objects and are not used to describe a particular order. Furthermore, the terms "including" and "having" and any variations thereof are intended to cover non-exclusive inclusion.

It should be understood that the reference to "indication" in embodiments of the present disclosure may be a direct indication, may be an indirect indication, or may be indicative of an association. For example, A indicates B, which can mean that A directly indicates B, for example, B can be obtained through A. It can also mean that A indirectly indicates B, for example, A indicates C, and B can be obtained through C. It can also mean that there is an association between A and B.

In the description of embodiments of the present disclosure, the term "correspond" may mean that there is a direct correspondence or an indirect correspondence between the two, may also mean that there is an association relationship between the two, may also be a relationship between indicating and being indicated, configuring and being configured, etc.

In the present disclosure, "predefined" may be achieved by pre-storing corresponding codes, tables or other means that indicate relevant information in devices (e.g., including terminal devices and network devices), and the present disclosure does not limit the specific implementation thereof. For example, "predefined" may refer to what is defined in the protocol.

In the present disclosure, the "protocol" may refer to standard protocols in the communication field, for example, may include LTE protocol, NR protocol and related protocols applied in future communication systems, which are not limited in the present disclosure.

The sidelink communication may be divided into sidelink communication with network coverage, sidelink communication with partial network coverage, and sidelink communication outside network coverage according to the network coverage of the communication terminal.

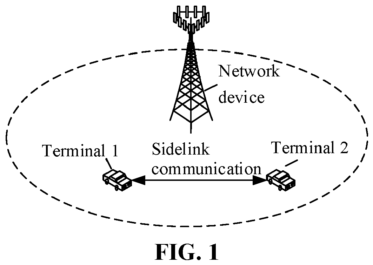

FIG. 1 to FIG. 5 are system frameworks of vehicle terminal to vehicle terminal according to the present disclosure.

As illustrated in FIG. 1, for the sidelink communication with network coverage, all terminals (including terminal 1 and terminal 2) for sidelink communication are within the coverage of a network device, so that all terminals may receive configuration signaling from the network device and perform sidelink communication based on the same sidelink configuration.

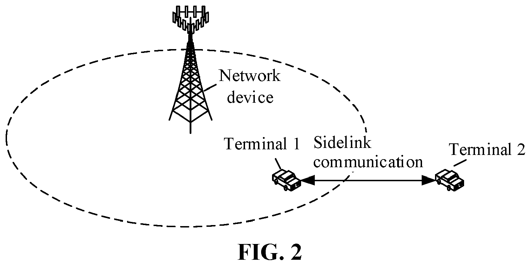

As illustrated in FIG. 2, for the sidelink communication with partial network coverage, a part of terminals performing sidelink communication is located within the coverage of the network device, and these terminals (i.e., terminal 1) can receive the configuration signaling from the network device and perform sidelink communication according to the configuration of the network device. While, the terminal located outside the network coverage (i.e., terminal 2) cannot receive the configuration signaling from the network device. In this case, the terminal outside the network coverage determines the sidelink configuration based on pre-configuration information and information carried in the sidelink broadcast channel (PSBCH) sent by the terminal located within the network coverage, and performs sidelink communication.

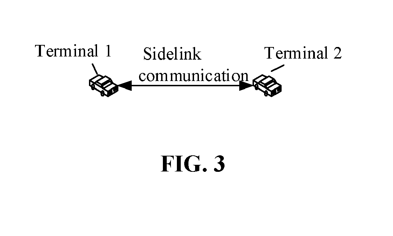

As illustrated in FIG. 3, for the sidelink communication outside network coverage, all terminals performing sidelink communication (including terminal 1 and terminal 2) are located outside the network coverage, and all terminals determine sidelink configuration based on pre-configuration information to perform sidelink communication.

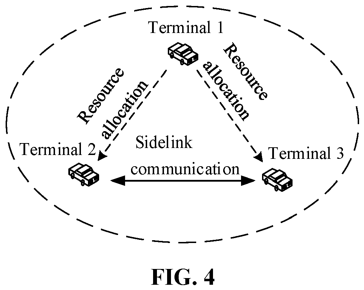

As illustrated in FIG. 4, for sidelink communication with a central control node, multiple terminals (including terminal 1, terminal 2 and terminal 3) constitute a communication group. The communication group has a central control node, which may also become a cluster header (CH). The central control node has one of the following functions: being responsible for establishing the communication group; joining and leaving of group members; performing resource coordination, allocating sidelink transmission resources for other terminals and receiving sidelink feedback information of other terminals; or resource coordination with other communication groups, etc. For example, terminal 1 illustrated in FIG. 4 is a central control node in a communication group consisting of terminal 1, terminal 2 and terminal 3.

D2D communication is a SL transmission technology based on D2D. Different from the traditional cellular system in which communication data is received or sent through the network device, the Internet of Vehicles system adopts the D2D direct communication mode, so it has higher spectrum efficiency and lower transmission delay. Two transmission modes are defined in 3GPP: a first mode and a second mode.

The first mode:
the transmission resources of the terminal are allocated by the network device, and the terminal sends data on the sidelink according to the resources allocated by the network device. The network device may allocate resources of single transmission for the terminal, and may also allocate resources for semi-static transmission for the terminal. As illustrated in FIG. 1, terminals are located within the network coverage, and the network allocates transmission resources for sidelink transmission to the terminals.

The second mode:
the terminal selects a resource in a resource pool for data transmission. As illustrated in FIG. 3, the terminal is located outside the coverage of a cell, and the terminal independently selects transmission resources from a pre-configured resource pool for sidelink transmission. Alternatively, in FIG. 1, the terminal independently selects transmission resources from a resource pool configured by the network for sidelink transmission.

In NR-V2X, it needs to support automatic driving, so higher requirements are proposed for data interaction between vehicles, such as higher throughput, lower delay, higher reliability, larger coverage and more flexible resource allocation, etc.

In LTE-V2X, broadcast transmission mode is supported, and in NR-V2X, unicast and multicast transmission modes are introduced.

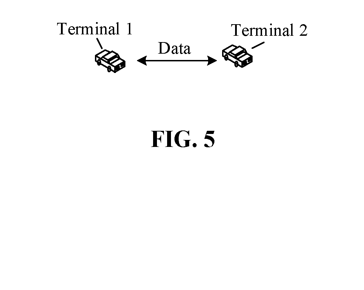

For unicast transmission, there is only one terminal at a receiving end. FIG. 5 is a schematic diagram of unicast transmission according to the present disclosure. As illustrated in FIG. 5, unicast transmission is performed between terminal 1 and terminal 2.

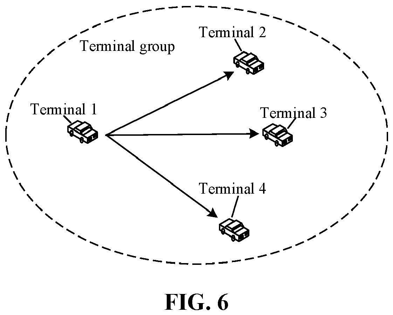

For multicast transmission, all terminals in a communication group or all terminals within a certain transmission distance serve as receiving terminals. FIG. 6 is a schematic diagram of multicast transmission according to the present disclosure. As illustrated in FIG. 6, terminal 1, terminal 2, terminal 3 and terminal 4 constitute a communication group in which terminal 1 sends data, and other terminal devices in this group are all receiving terminals.

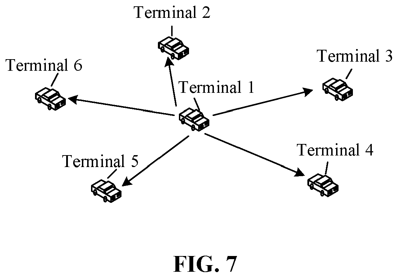

For broadcast transmission mode, the receiving terminal is any terminal around the sending terminal. FIG. 7 is a schematic diagram of broadcast transmission according to the present disclosure. As illustrated in FIG. 7, terminal 1 is a sending terminal, and other terminals around terminal 1, i.e., terminals 2-6 are receiving terminals.

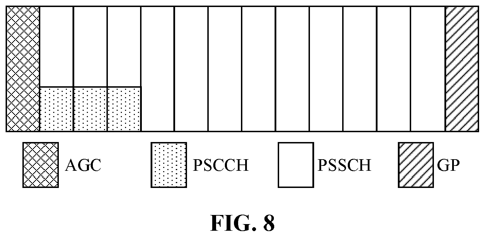

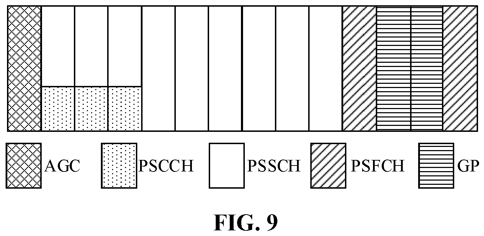

The slot structure in NR-V2X will be described below in conjunction with FIG. 8 and FIG. 9.

FIG. 8 illustrates an example of a slot structure not including a PSFCH channel according to an embodiment of the present disclosure; and FIG. 9 illustrates an example of a slot structure including a PSFCH channel according to an embodiment of the present disclosure.

As illustrated in FIG. 8 or FIG. 9, the PSCCH in NR-V2X starts from a second sidelink symbol of the slot in the time domain and occupies 2 or 3 OFDM symbols, and may occupy {10, 12, 15, 20, 25} PRBs in the frequency domain. In order to reduce the complexity of blind detection of PSCCH by the UE, only one PSCCH symbol number and PRB number can be configured in a resource pool. In addition, since the sub-channel is the minimum granularity of PSSCH resource allocation in NR-V2X, the number of PRBs occupied by PSCCH must be less than or equal to the number of PRBs contained in a sub-channel in the resource pool, so as to avoid causing additional restrictions on PSSCH resource selection or allocation. The PSSCH also starts from the second sidelink symbol of the slot in the time domain, the last time domain symbol in the slot is a guard period (GP) symbol, and the remaining symbols are mapped to the PSSCH. The first sidelink symbol in the slot is a repetition of the second sidelink symbol, which is typically used by the receiving terminal as an automatic gain control (AGC) symbol, and the data on this symbol is typically not used for data demodulation. The PSSCH occupies K sub-channels in the frequency domain, and each sub-channel includes N consecutive PRBs.

As illustrated in FIG. 8, the slot may not include the PSFCH channel.

As illustrated in FIG. 9, when the slot contains the PSFCH channel, a second-to-last symbol and a third-to-last symbol in the slot are used for PSFCH channel transmission, and a time domain symbol preceding the symbols for the PSFCH channel is used as a GP symbol.

In order to facilitate the technical solution provided by the present disclosure, the related contents of beam are explained below.

The design goal of NR/5G system includes high-frequency (such as frequency band above 6GHz) large-bandwidth communication. When the operating frequency becomes higher, the path loss in the transmission process will increase, which will affect the coverage ability of the high-frequency system. In order to effectively ensure the coverage of high-frequency NR system, an effective technical solution is that a shaped beam with greater gain is formed according to MIMO, thus overcoming propagation loss and ensuring system coverage. For a millimeter wave antenna array, because of shorter wavelength, smaller spacing and aperture, more physical antenna arrays may be integrated into a limited size two-dimensional antenna array. In addition, due to the limited size of millimeter wave antenna array, considering the hardware complexity, cost and power consumption, digital beamforming cannot be adopted, but analog beamforming is usually adopted, which may enhance the network coverage and reduce the implementation complexity of devices.

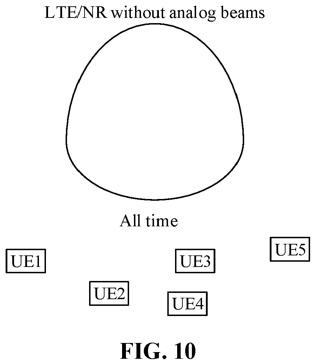

In a typical 2G/3G/4G system, a cell (sector) uses a wider beam to cover the whole cell. Therefore, at each moment, the UE within the cell coverage has the opportunity to acquire the transmission resources allocated by the system. FIG. 10 is a schematic diagram of a non-analog beam according to an embodiment of the present disclosure. As illustrated in FIG. 10, the LTE/NR network side uses a wide beam to cover the whole cell, and UE1-UE5 may receive signals sent by the network device at any time.

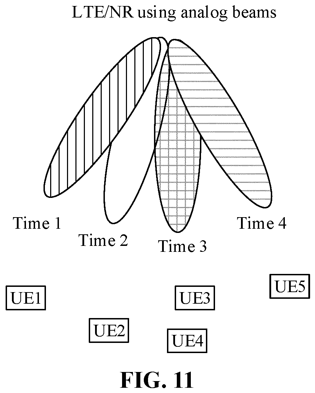

A multi-beam system in NR/5G covers the whole cell through different beams, that is, each beam covers a small range, and the effect of covering the whole cell by multiple beams is realized by sweeping in time. FIG. 11 is a schematic diagram of an analog beam according to an embodiment of the present disclosure. As illustrated in FIG. 11, the network side uses narrower beams (for example, beams 1-4 in the figure), and uses different beams to cover different areas in a cell at different moments, for example, at moment 1, the NR network side covers the area where a user 1 is located through the beam 1; at moment 2, the NR network side covers the area where a user 2 is located through the beam 2; at moment 3, the NR network side covers the area where a user 3 and a user 4 are located through the beam 3; and at moment 4, the NR network side covers the area where a user 5 is located through the beam 4. Since the network uses a narrower beam, the transmission energy may be more concentrated, so it may cover a longer distance; in addition, since the beams are narrower, each beam can only cover part of the cell, so analog beam-forming is "time for space".

The analog beam-forming may be used not only for network side devices, but also for terminal devices. In addition, the analog beam-forming may be used not only for signal transmission, but also for signal reception. A beam for sending a signal may be referred to as a transmission beam and a beam for receiving a signal may be referred to as a receiving beam.

Different beams are identified by different signals carried on them. As an example, different synchronization signals/PBCH blocks (SSB) are transmitted on different beams, and the UE may distinguish different beams through different SSBs. As another example, different CSI-RSs are transmitted on different beams, and the UE identifies different beams through CSI-RS/CSI-RS resources. In other words, the CSI-RS referred to in the present disclosure may be understood as an actual signal corresponding to certain physical beam(s).

In a multi-beam system, Physical Downlink Control Channel (PDCCH) and PDSCH may be transmitted through different downlink transmission beams.

For systems with carrier frequencies below 6GHz, there is generally no analog beam on UE side, so an omni-directional antenna (or a nearly omni-directional antenna) is adopted to receive signals sent by base station through different downlink transmission beams.

For millimeter wave systems, there may be analog beams on the UE side, so it is necessary to use a corresponding downlink receiving beam to receive a signal sent through a corresponding downlink transmission beam. At this time, corresponding beam indication information is needed to assist the UE in determining the transmission beam-related information on the network side or the receiving beam-related information corresponding to the UE side.

In the NR protocol, the beam indication information is not used to indicate the beam directly, but to indicate the beam through quasi-co-located (QCL) between the signals. On the UE side, the statistical characteristics of the received corresponding channel/signal are determined also based on the QCL assumption. Specifically, when the terminal receives signals, in order to improve the reception performance, the terminal may improve the reception algorithm by utilizing the characteristics of the transmission environment corresponding to the data transmission. For example, statistical characteristics of a channel may be utilized to optimize the design and parameters of a channel estimator. In NR system, these characteristics of data transmission are represented by QCL state (QCL-Info).

If downlink transmission comes from different transmission reception points (TRPs)/antenna array blocks (panels)/beams, then the characteristics of transmission environment corresponding to data transmission may also change. Therefore, in NR system, when transmitting downlink control channel or data channel, the network side will indicate corresponding QCL state information to the terminal device through a TCI state.

A TCI state may contain the following configuration:
A TCI state ID, which is used to identify the TCI state; and
QCL Information 1.

Optionally, the TCI state may also include QCL information 2.

Herein, QCL information contains the following information:
QCL type configuration, which may be one of QCL typeA, QCL typeB, QCL typeC, or QCL typeD;
QCL reference signal configuration, which includes a cell ID of a cell where the reference signal is located, a BWP ID and an identifier of the reference signal. The identifier of the reference signal may be a CSI-RS resource ID or an SSB index.

Herein, if both QCL information 1 and QCL information 2 are configured, the QCL type of at least one QCL information must be one of QCL typeA, QCL typeB or QCL typeC, and the QCL type of the other QCL information must be QCL typeD.

Herein, the QCL type configuration is defined as follows:
`QCL-TypeA': {Doppler shift, Doppler spread, average delay, delay spread}.
'QCL-TypeB': {Doppler shift, Doppler spread}.
`QCL-TypeC': {Doppler shift, average delay}.
'QCL-TypeD': {Spatial Rx parameter}.

The syntax element of the TCI state may be implemented as:

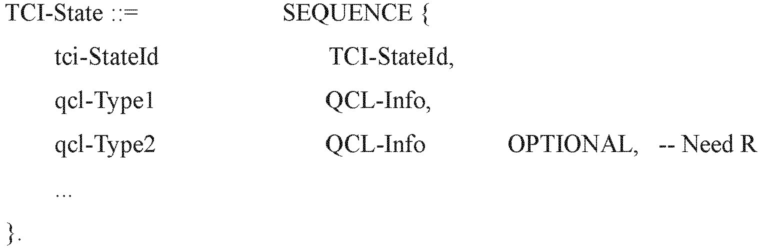

The syntax element of the TCI information may be implemented as:

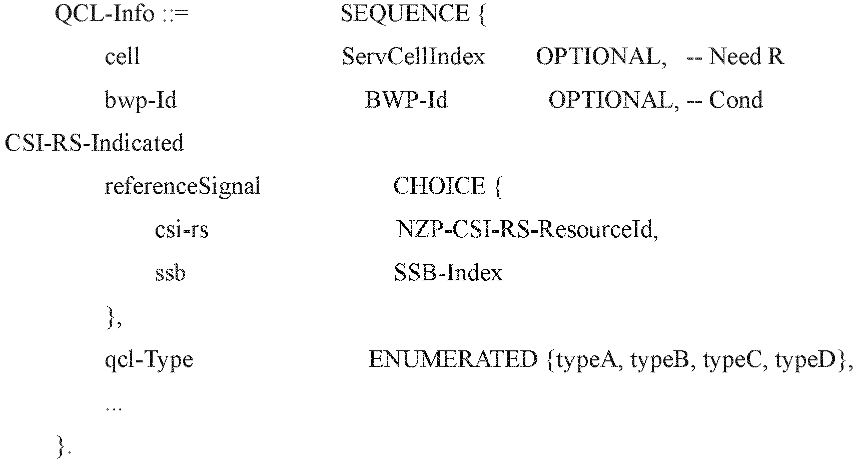

In the NR system, the network side may indicate a corresponding TCI state for a downlink signal or downlink channel.

If the network side configures a QCL reference signal of a target downlink channel or a target downlink signal as a reference SSB or a reference CSI-RS resource through the TCI state, and the QCL type is configured as the QCL typeA, QCL typeB or QCL typeC, then the terminal may assume that a large-scale parameter of the target downlink channel or the target downlink signal is the same as that of the reference SSB or the reference CSI-RS resource, and the large-scale parameter is determined through the QCL type configuration.

Similarly, if the network side configures the QCL reference signal of the target downlink channel or the target downlink signal as the reference SSB or the reference CSI-RS resource through the TCI state, and the QCL type is configured as the QCL typeD, then the terminal may receive the target downlink channel or the target downlink signal using the same receiving beam as that used to receive the reference SSB or the reference CSI-RS resource. Usually, the target downlink channel (or downlink signal) and its reference SSB or reference CSI-RS resource are transmitted through the same TRP, the same antenna array block (panel) or the same beam on the network side. If two downlink signals or downlink channels have different TRPs or antenna array blocks or transmission beams, different TCI states are typically configured.

For the downlink control channel, the TCI state corresponding to CORESET may be indicated through RRC signaling or through RRC signaling and MAC signaling.

For the downlink data channel, a set of available TCI states are indicated through RRC signaling, herein some of the TCI states are activated through MAC layer signaling, and finally one or two TCI states are indicated from the activated TCI states through a TCI state indication field in DCI for PDSCH for DCI scheduling.

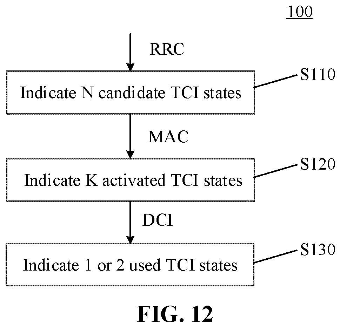

FIG. 12 is a schematic flowchart of a method for configuring a TCI state of a PDSCH according to an embodiment of the present disclosure.

As illustrated in FIG. 12, the method 100 may include the following operations.

In S 110, N candidate TCI states are indicated.

In S120, K activated TCI states are indicated.

In S130, 1 or 2 used TCI states are indicated.

It should be noted that the beam involved in the present disclosure may also be referred to as a spatial domain filter or may correspond to a spatial domain filter, herein a transmission beam may be referred to as a spatial domain transmission filter or may correspond to a spatial domain transmission filter, and a receiving beam may be referred to as a spatial domain receiving filter or may correspond to a spatial domain receiving filter.

As can be seen from the above, the design goal of the NR/5G system includes high-frequency large-bandwidth communication, such as a frequency band above 6GHz. However, when the operating frequency of the terminal device becomes higher, the path loss in the transmission process will increase, which will affect the coverage ability of the high frequency system. In order to effectively ensure the coverage of high-frequency band NR system, a shaped beam with greater gain may be formed using analog beamforming based on Massive MIMO, thus overcoming propagation loss and ensuring system coverage. Specifically, a cell is fully covered by Multi-beam, that is, each beam covers a small range, and the effect of covering the whole cell by multiple beams is realized by sweeping in time. In the specific transmission process, a network device may assist a terminal side to determine relevant information of transmission beams of a network side or relevant information of receiving beams corresponding to the terminal side through beam indication information.

However, if high-frequency large-bandwidth communication is introduced into a NR SL system, since both a receiving terminal and a sending terminal perform sidelink communication based on multi-beam, the receiving beams of the receiving terminal and the transmission beams of the sending terminal may be misaligned, which reduces the signal gain and transmission performance.

On this basis, embodiments of the present disclosure provide a wireless communication method, a first terminal device and a second terminal device, which can ensure that a target spatial domain receiving filter used by the first terminal device is aligned with a spatial domain transmission filter used by the second terminal device, thereby maximizing the signal gain and improving the transmission performance.

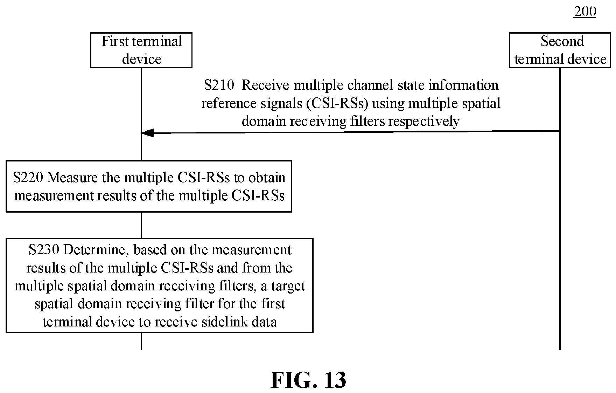

FIG. 13 is a schematic flowchart of a wireless communication method 200 according to an embodiment of the present disclosure. The method 200 may be interactively performed by a first terminal device and a second terminal device. The first terminal device may be a receiving end for receiving a CSI-RS, and the second terminal device may be a sending end for sending the CSI-RS. For example, the first terminal device or the second terminal device may be the terminal B mentioned above, and the first terminal device or the second terminal device may be the terminal A mentioned above.

As illustrated in FIG. 13, the method 200 may include some or all of the following.

In S210, multiple channel state information reference signals (CSI-RSs) are received using multiple spatial domain receiving filters respectively.

In S220, the multiple CSI-RSs are measured to obtain measurement results of the multiple CSI-RSs.

In S230, a target spatial domain receiving filter for a first terminal device to receive sidelink data is determined among the multiple spatial domain receiving filters based on the measurement results of the multiple CSI-RSs.

In other words, the first terminal device measures the CSI-RSs received using multiple spatial domain receiving filters respectively, and determines the target spatial domain receiving filter for the first terminal device to receive the sidelink data from the multiple spatial domain receiving filters based on the measurement results of the multiple CSI-RSs.

Based on the above solution, the first terminal device may determine, based on the measurement results of the multiple CSI-RSs and from the multiple spatial domain receiving filters, the target spatial domain receiving filter for the first terminal device to receive the sidelink data. On this basis, when the first terminal device receives, through the target spatial domain receiving filter, sidelink data sent by the second terminal device using a spatial domain transmission filter corresponding to the target spatial domain receiving filter, it can ensure that the target spatial domain receiving filter is aligned with the spatial domain transmission filter used by the second terminal device, thereby maximizing the signal gain and improving the transmission performance.

In some embodiments, the multiple CSI-RSs include sidelink CSI-RSs.

In some embodiments, the multiple CSI-RSs may also be replaced by other sidelink signals, i.e., in S210 described above, the first terminal device may receive multiple sidelink signals using the multiple spatial domain receiving filters respectively.

In some embodiments, a sidelink signal of the multiple sidelink signals includes, but is not limited to, one of the following:
a CSI-RS, a demodulation reference signal (DMRS), a PSCCH DMRS, a PSSCH DMRS, a positioning reference signal (PRS), a phase tracking reference signal (PT-RS) or a sidelink synchronization signal (including at least one of a sidelink primary synchronization signal or a sidelink auxiliary synchronization signal).

In some embodiments, the operation of S210 may include the following action.

The multiple CSI-RSs sent by the second terminal device using a same spatial domain transmission filter are received using the multiple spatial domain receiving filters respectively.

In other words, the second terminal device sends the multiple CSI-RSs using the same spatial domain transmission filter, so that the first terminal device uses the multiple spatial domain receiving filters to respectively receive the multiple CSI-RSs sent by the second terminal device using the same spatial domain transmission filter, and further determines the target spatial domain receiving filter based on the measurement results of the multiple CSI-RSs.

That is, the spatial domain transmission filter used by the second terminal device when sending the multiple CSI-RSs is the target (or an optimal) spatial domain transmission filter, and the target spatial domain receiving filter is an optimal spatial domain receiving filter of the first terminal device corresponding to the target spatial domain transmission filter.

Specifically, in the process of determining the target (or optimal) spatial domain transmission filter of the second terminal device, the second terminal device uses different spatial domain transmission filters to send CSI-RSs in turn. The first terminal device uses the same spatial domain receiving filter to receive multiple CSI-RSs sent by the second terminal device respectively, measures the detected CSI-RSs, selects an optimal CSI-RS resource and feeds it back to the second terminal device. The spatial domain transmission filter corresponding to the CSI-RS resource is the target (or optimal) spatial domain transmission filter for the first terminal device.

In the process of determining the target (or optimal) spatial domain receiving filter of the first terminal device, the second terminal device sends the CSI-RSs using the same spatial domain transmission filter. Preferably, the second terminal device sends the CSI-RSs using an optimal spatial domain transmission filter for the first terminal device. The first terminal device receives the CSI-RSs from the second terminal device using different spatial domain receiving filters in turn, measures the received CSI-RSs, and selects a spatial domain receiving filter with an optimal measurement result as the optimal spatial domain receiving filter of the first terminal device corresponding to the optimal spatial domain transmission filter. When the second terminal device uses the optimal spatial domain transmission filter for sidelink transmission, the first terminal device may use its corresponding optimal spatial domain receiving filter for corresponding reception. Optionally, the second terminal device adopts the above process for different spatial domain transmission filters respectively, and may determine an optimal spatial domain receiving filter corresponding to each spatial domain transmission filter respectively. Therefore, when the second terminal device is performing the sidelink transmission, the second terminal device may indicate a spatial domain transmission filter used for the sidelink transmission, and the first terminal device may determine a corresponding optimal spatial domain receiving filter and perform the sidelink reception utilizing the optimal spatial domain receiving filter.

In some embodiments, the method 200 may further include the following operation.

First indication information is sent to the second terminal device.

Herein, the first indication information indicates the number of the multiple spatial domain receiving filters.

In other words, after the first terminal device indicates the number of spatial domain receiving filters available to the first terminal device for sidelink CSI-RS reception through the first indication information to the second terminal device, the second terminal device may send CSI-RSs to the first terminal device based on the number of spatial domain receiving filters indicated through the first indication information, for example, the number of CSI-RSs sent by the second terminal device is the same as the number of spatial domain receiving filters indicated through the first indication information.

Since the second terminal device is not aware of the antenna configuration of the first terminal device, it is impossible to determine how many spatial domain receiving filters are supported by the first terminal device. In the present embodiment, in order to assist the second terminal device to determine the number or times of CSI-RSs sent, the first terminal device sends the first indication information to the second terminal device to indicate the number of spatial domain receiving filters supported by the first terminal device, so as to ensure that the CSI-RSs sent by the second terminal device may be received once by the first terminal device using all spatial domain receiving filters. Optionally, when the first terminal device supports N spatial domain receiving filters, the number or times of CSI-RSs sent by the second terminal device should be greater than or equal to N.

Optionally, the multiple spatial domain receiving filters include at least one spatial domain receiving filter supported by the first terminal device.

Optionally, the multiple spatial domain receiving filters include at least one spatial domain receiving filter of the first terminal device operable for sidelink data reception.

Optionally, the first indication information is carried in at least one of the following: sidelink control information (SCI), media access control (MAC) control element (CE) or PC5 radio resource control (RRC).

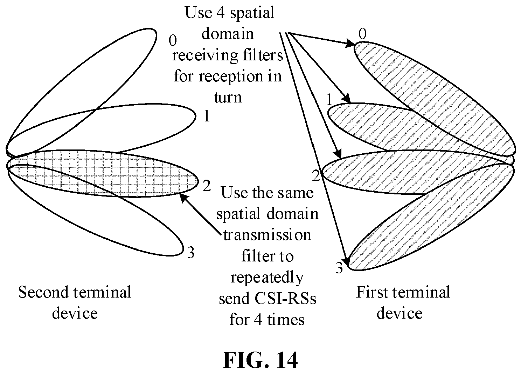

FIG. 14 is a schematic diagram for receiving multiple CSI-RSs based on first indication information according to an embodiment of the present disclosure.

As illustrated in FIG. 14, it is assumed that the first terminal device supports 4 spatial domain receiving filters, therefore the first indication information sent by the first terminal device to the second terminal device indicates 4. When sending CSI-RSs, the second terminal device sends the CSI-RSs at least four times using an optimal spatial domain transmission filter, such as a spatial domain transmission filter 2, so that the first terminal device may measure the CSI-RSs sent by the second terminal device using different spatial domain receiving filters respectively, thereby selecting an optimal spatial domain receiving filter, such as a spatial domain receiving filter 2.

In some embodiments, the method 200 may further include that: second indication information sent by the second terminal device is received.

Herein, the second indication information indicates the maximum number of CSI-RSs sent by the second terminal device; or the second indication information indicates the maximum number of CSI-RS resources corresponding to CSI-RSs sent by the second terminal device.

In other words, the second terminal device sends the second indication information to the first terminal device. The second indication information indicates a parameter M, which represents the maximum number of CSI-RS resources included in a CSI-RS resource set sent by the second terminal device, or represents the maximum number or maximum times of CSI-RSs to be sent by the second terminal device, or represents the maximum number or maximum times of CSI-RS resources to be sent by the second terminal device.

Since the second terminal device is not aware of the number of spatial domain receiving filters available to the first terminal device for sidelink data reception, in the present embodiment, the maximum number of CSI-RSs or CSI-RS resources to be sent to the first terminal device may be determined by the second terminal device and indicated to the first terminal device through the second indication information, so that the first terminal device selects spatial domain receiving filters for receiving CSI-RSs based on the maximum number indicated through the second indication information, for example, the number of spatial domain receiving filters selected by the first terminal device is equal to the maximum number.

In other words, when the second terminal device is not aware of the number of spatial domain receiving filters supported by the first terminal device, the second terminal device may send CSI-RSs for M times using the same spatial domain transmission filter and inform the parameter M to the first terminal device. At this time the first terminal device decides which spatial domain receiving filters to receive CSI-RSs sent by the second terminal device in turn.

In addition, the first terminal device may be aware of how many times the second terminal device will send CSI-RSs based on the second indication information, and then determine whether the second terminal device has completed all the CSI-RS transmission. If the second terminal device has completed all the CSI-RS transmission, then the first terminal device may select the spatial domain receiving filter based on the RSRP measured by the CSI-RS.

Optionally, the second indication information indicates the number of CSI-RSs sent by the second terminal device; or the second indication information indicates the number of CSI-RS resources corresponding to CSI-RSs sent by the second terminal device. Alternatively, the second indication information indicates the number of the multiple CSI-RSs; or the second indication information indicates the number of CSI-RS resources corresponding to the multiple CSI-RSs.

Optionally, the maximum number is greater than or equal to the number of the multiple CSI-RSs.

In other words, the maximum number of CSI-RSs sent by the second terminal device may be greater than or equal to the number of CSI-RSs actually sent by the second terminal device, and similarly, the maximum number of CSI-RS resources corresponding to CSI-RSs sent by the second terminal device may be greater than or equal to the number of resources corresponding to CSI-RSs actually sent by the second terminal device. In other words, the maximum number of CSI-RSs sent by the second terminal device may be the number of CSI-RSs that the second terminal device plans or intends to send, and the maximum number of CSI-RS resources corresponding to CSI-RSs sent by the second terminal device may be the number of CSI-RS resources corresponding to CSI-RSs that the second terminal device plans or intends to send.

Optionally, the second indication information indicating the maximum number of CSI-RS resources corresponding to CSI-RSs sent by the second terminal device, includes: the second indication information indicates the number of all CSI-RS resources in a CSI-RS resource set corresponding to CSI-RSs sent by the second terminal device.

In other words, the multiple CSI-RSs are CSI-RSs received on spatial domain receiving filters corresponding to CSI-RS resources in the CSI-RS resource set corresponding to CSI-RSs sent by the second terminal device.

Optionally, the second indication information is carried in at least one of the following: SCI, MAC CE or PC5 RRC.

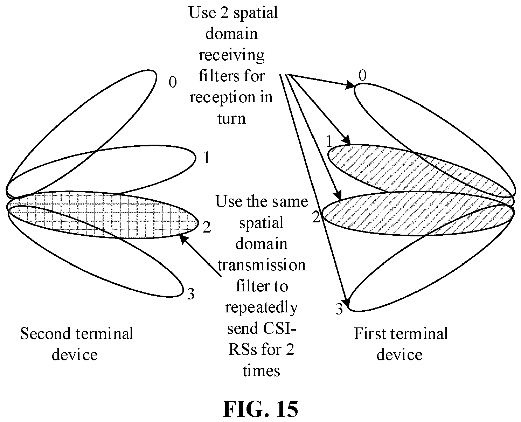

FIG. 15 is a schematic diagram of a first terminal device receiving multiple CSI-RSs based on second indication information according to an embodiment of the present disclosure.

As illustrated in FIG. 15, it is assumed that the first terminal device supports 4 spatial domain receiving filters, but the second terminal device is unaware that the first terminal device supports 4 spatial domain receiving filters, when the second terminal device sends CSI-RSs using the same spatial domain transmission filter, the second terminal device sends CSI-RSs twice, i.e., sends CSI-RS resources twice using spatial domain transmission filter 2, and indicates the number of sending CSI-RS resources (i.e., 2) to the first terminal device. The first terminal device may determine that the second terminal device will send CSI-RS twice, and then the first terminal device decides the spatial domain receiving filters used when receiving the CSI-RSs for two times. For example, the first terminal device may use a spatial domain receiving filter 1 and the spatial domain receiving filter 2 for reception, or use a spatial domain receiving filter 0 and the spatial domain receiving filter 2 for reception, or use the spatial domain receiving filter 1 and a spatial domain receiving filter 3 for reception, which is not specifically limited in the present embodiment.

In some embodiments, the method 200 may further include that: third indication information sent by the second terminal device is received.

Herein the third indication information indicates at least one of the following: at least one CSI-RS resource set corresponding to the multiple CSI-RSs; or a CSI-RS resource corresponding to the multiple CSI-RSs in each of at least one CSI-RS resource set.

In other words, the first terminal device may receive the multiple CSI-RSs based on the CSI-RS resource set or CSI-RS resources indicated by the third indication information.

Optionally, different CSI-RSs in the multiple CSI-RSs correspond to different CSI-RS resources.

Optionally, the third indication information includes at least one of the following: an identifier of the at least one CSI-RS resource set; or an identifier of the CSI-RS resource corresponding to the multiple CSI-RSs in each of the at least one CSI-RS resource set.

Optionally, a repetition parameter of the at least one CSI-RS resource set is set to on.

In other words, a repetition parameter of the CSI-RS resource set for receiving the multiple CSI-RSs is set to on.

Optionally, a report quantity associated with the at least one CSI-RS resource set is set to no report or none.

In other words, a report quantity of the CSI-RS resource set for receiving the multiple CSI-RSs is set to none, that is, the first terminal device does not need to report to the second terminal device after receiving the multiple CSI-RSs.

Optionally, the third indication information is carried in at least one of the following: SCI, MAC CE or PC5 RRC.

In some embodiments, the method 200 may further include the following operations.

Resource pool configuration information or sidelink bandwidth part (BWP) configuration information is obtained. Herein the resource pool configuration information or the BWP configuration information is used to configure at least one CSI-RS resource set or at least one CSI-RS resource.

The at least one CSI-RS resource set is determined based on the at least one CSI-RS resource set configured by the resource pool configuration information or the BWP configuration information.

In other words, after obtaining the at least one CSI-RS resource set configured by the resource pool configuration information or the BWP configuration information, the first terminal device may determine the CSI-RS resource set for the first terminal device to receive the multiple CSI-RSs based on the at least one CSI-RS resource set configured by the resource pool configuration information or the BWP configuration information.

The second terminal device and the first terminal device may be enabled to have the same CSI-RS resource configuration through the resource pool configuration information or the sidelink BWP configuration information. The second terminal device and the first terminal device may be further enabled to have the same understanding for the sending of CSI-RS resource and at least one CSI-RS resource set and/or CSI-RS resource indicated by the third indication information.

It should be noted that the at least one CSI-RS resource set determined by the first terminal device may be one of the at least one CSI-RS resource set configured by the resource pool configuration information, or may only be a part of CSI-RS resources selected from the at least one CSI-RS resource set configured by the resource pool configuration information, which is not specifically limited in the present disclosure.

As an example, the third indication information indicates at least one of the A CSI-RS resource sets configured by the resource pool configuration information or the sidelink BWP configuration information. For each CSI-RS resource set, the third indication information also indicates K CSI-RS resources in the CSI-RS resource set, herein 1 < = K < = B, and B represents the total number of CSI-RS resources included in the CSI-RS resource set.

As another example, the resource pool configuration information or the sidelink BWP configuration information is used to configure A CSI-RS resource sets. The first terminal device sends the third indication information to the second terminal device through PC5-RRC signaling, and the third indication information includes an index of the CSI-RS resource set. The CSI-RS resource set, which corresponds to CSI-RSs to be sent by the second terminal device, may be determined based on the index of the CSI-RS resource set. Further, the CSI-RS resource set includes B CSI-RS resources, the second terminal device may select K CSI-RS resources from the CSI-RS resource set, and send information of the K CSI-RS resources to the first terminal device through the third indication information. The CSI-RS resources sent by the second terminal device later are resources belonging to the K CSI-RS resources. For example, the CSI-RS resource set includes 16 CSI-RS resources. When at least one spatial domain receiving filter of the first terminal device needs to be determined, the maximum number of the spatial domain receiving filters supported by the first terminal device is 4. At this time, the first terminal device selects 4 CSI-RS resources from the 16 CSI-RS resources included in the CSI-RS resource set, and sends information of the 4 CSI-RS resources to the second terminal device through the PC5-RRC signaling, so that the second terminal device and the first terminal device have the same CSI-RS resource information.

Optionally, the at least one CSI-RS resource set configured by the resource pool configuration information or the BWP configuration information includes a first CSI-RS resource set and a second CSI-RS resource set. A repetition parameter of the first CSI-RS resource set is set to off, and a repetition parameter of the second CSI-RS resource set is set to on. The at least one CSI-RS resource set is determined according to the second CSI-RS resource set.

In other words, the at least one CSI-RS resource set (i.e., CSI-RS-ResourceSet) configured by the resource pool configuration information or the BWP configuration information may include at least one first CSI-RS resource set with the repetition parameter set to off, and/or include at least one second CSI-RS resource set with the repetition parameter set to on. Optionally, the first CSI-RS resource set is used to determine the spatial domain transmission filter of the second terminal device, and the second CSI-RS resource set is used to determine the at least one spatial domain receiving filter of the first terminal device.

It should be noted that, in the present embodiment, whether CSI-RSs sent by the second terminal device are used to determine a spatial domain transmission filter or a spatial domain receiving filter may be embodied or indicated by a repetition parameter of the CSI-RS resource set used by the second terminal device. For example, it is assumed that the at least one CSI-RS resource set configured by the resource pool configuration information or the BWP configuration information includes 2 CSI-RS resource sets, herein a repetition parameter in one CSI-RS resource set is off, and a repetition parameter in the other CSI-RS resource set is on. When the spatial domain transmission filter is determined, the CSI-RS resource set with the repetition parameter being off is used. At this time, the second terminal device uses different spatial domain transmission filters to send the CSI-RS resources in the CSI-RS resource set respectively. The first terminal device measures the CSI-RS resources respectively and feeds back the CSI-RS resource index. The second terminal device may determine the corresponding spatial domain transmission filter based on the index. When the spatial domain receiving filter is determined, the CSI-RS resource set with the repetition parameter being on is used. At this time, the second terminal device uses the same spatial domain transmission filter to send the CSI-RS resources in the CSI-RS resource set respectively. The first terminal device uses different spatial domain receiving filters respectively to receive the CSI-RS resources, measures RSRPs for the CSI-RSs, and selects an optimal spatial domain receiving filter based on the measurement results.

That is, when CSI-RSs sent by the second terminal device are used to determine the spatial domain transmission filter of the second terminal device, the second terminal device sends CSI-RS resources in the first CSI-RS resource set using different spatial domain transmission filters in turn. When CSI-RSs sent by the second terminal device are used to determine the at least one spatial domain receiving filter of the first terminal device, the second terminal device sends CSI-RS resources in the second CSI-RS resource set using the same spatial domain transmission filter.

Optionally, the resource pool configuration information or the BWP configuration information includes at least one of the following:
an identifier of the at least one CSI-RS resource set (CSI-RS-ResourceSetId);
a repetition parameter of the at least one CSI-RS resource set;
an identifier of the at least one CSI-RS resource;
a CSI report quantity;
an identifier of CSI report configuration;
the number N of symbols occupied by a CSI-RS resource in the time domain, herein N is an integer greater than or equal to 1;
information for determining time domain symbols for the CSI-RS resource in a slot;
information for determining a location of a resource element (RE) or a sub-carrier for the CSI-RS resource within a physical resource block (PRB);
the number of CSI-RS antenna ports; or
a CSI-RS density, which indicates the number of REs occupied by a CSI-RS of an antenna port in a PRB.

Optionally, an identifier of the CSI-RS resource set is used to uniquely identify the CSI-RS resource set.

Optionally, the repetition parameter of the CSI-RS resource set may be set to on or off.

Optionally, an identifier of the CSI-RS resource is used to uniquely identify the CSI-RS resource.

Optionally, for each of the at least one CSI-RS resource set configured by the resource pool configuration information or the BWP configuration information, the resource pool configuration information or the BWP configuration information may include an identifier of the CSI-RS resource set (i.e., CSI-RS-ResourceSetId), an identifier of a CSI-RS resource (CSI-RS-Resource), and a repetition parameter.

Optionally, the CSI report quantity is used to configure the report quantity or feedback type. The report quantity or feedback type includes but is not limited to the following:
a CSI-RS resource indicator (CRI), a CRI and RSRP ('CRI-RSRP'), a CRI and signal to interference-plus-noise ratio (SINR) ('cri-SINR'), a slot resource indication, a slot resource indication and RSRP, a slot resource indication and SINR, no reporting or 'none'.

Optionally, the identifier of CSI report configuration may be used to associate the CSI report quantity to the CSI-RS resource set or the CSI-RS resource.

Optionally, the CSI report quantity and the identifier of CSI report configuration may be included in the CSI report configuration information (i.e., CSI-ReportConfig).

In other words, the resource pool configuration information or the BWP configuration information may include at least one CSI report configuration information, herein each of the at least one CSI report configuration information includes the identifier of CSI report configuration (CSI-ReportConfigId) and the report quantity.

Optionally, the information for determining time domain symbols of the CSI-RS resource in the slot may be an index of the time domain symbols in the slot.

Optionally, the information for determining the location of the resource element (RE) or the sub-carrier for the CSI-RS resource within the physical resource block (PRB) may indicate the location of the RE or sub-carrier for the CSI-RS resource within a PRB in the form of a bit map by a parameter sl-CSI-RS-FreqAllocation.

Optionally, the information for determining the location of the RE or the sub-carrier for the CSI-RS resource within the PRB may be information for determining a location of a RE or a sub-carrier for a first CSI-RS resource within a PRB.

Optionally, the number of CSI-RS antenna ports includes, but is not limited to, 1, 2, 4, 8, etc.

Optionally, the CSI-RS density indicates the number of REs occupied by a CSI-RS for each antenna port within a PRB. If the density is 2, it means that within each PRB, the CSI-RS of each antenna port occupies 2 REs.

Optionally, the CSI-RS density is less than 1, and the CSI-RS resource configuration information further includes information indicating a PRB to which the at least one CSI-RS resource is mapped. If the density is 0.5, i.e., each antenna port in every 2 PRBs occupies 1 RE. At this time, the CSI-RS resource configuration information further includes information indicating a PRB to which a CSI-RS resource is mapped in every 2 PRBs, such as mapping the CSI-RS on odd (or even) PRB.

In some embodiments, the method 200 may further include that: fourth indication information sent by the second terminal device is received.

Herein the fourth indication information indicates that CSI-RSs sent by the second terminal device are used to measure channel state information; or the fourth indication information indicates that CSI-RSs sent by the second terminal device are used to determine a target spatial domain transmission filter for the second terminal device to perform sidelink data transmission; or the fourth indication information indicates that CSI-RSs sent by the second terminal device are used for the first terminal device to determine the target spatial domain receiving filter.

In other words, after receiving the fourth indication information, the first terminal device may determine, based on the fourth indication information, whether CSI-RSs sent by the second terminal device are used to measure the channel state information, used to determine the target spatial domain transmission filter for the second terminal device to perform sidelink data transmission, or used to determine the target spatial domain receiving filter.

In a sidelink system, CSI-RS and PSCCH carrying SCI are usually transmitted in the same slot. When receiving the PSCCH, the first terminal device usually needs to use a spatial domain receiving filter to receive the PSCCH. Therefore, the first terminal device needs to aware in advance that whether the PSCCH and its associated CSI-RS are used to determine the spatial domain receiving filter, so as to aware that whether it is necessary to use different spatial domain receiving filters to receive CSI-RSs sent by the second terminal device respectively. In the present embodiment, the first terminal device may distinguish, based on the fourth indication information, whether the sidelink data or CSI-RSs sent by the second terminal device is used for normal data transmission or used to determine a spatial domain transmission filter or a spatial domain receiving filter. For a CSI-RS in a normal data transmission process, the first terminal device receives the CSI-RS using the spatial domain receiving filter corresponding to the spatial domain transmission filter, and measures the CSI-RS and feeds back a channel quality indicator (CQI) and a rank indication (RI). For a CSI-RS sent in the process of determining the spatial domain transmission filter, the first terminal device usually adopts the same spatial domain receiving filter to receive the CSI-RS, performs CSI-RS measurement and selects a preferred CSI-RS resource to feed back to the second terminal device, so that the second terminal device determines the optimal spatial domain transmission filter. For a CSI-RS sent in the process of determining the at least one spatial domain receiving filter of the first terminal device, the first terminal device needs to use different spatial domain receiving filters to receive the CSI-RS in turn, and select the optimal spatial domain receiving filter based on the measurement result.

Optionally, the channel state information includes, but is not limited to: a CQI, a RI, or a pre-coding matrix indicator (PMI).

Optionally, the fourth indication information indicating that CSI-RSs sent by the second terminal device are used for the first terminal device to determine the target spatial domain receiving filter, includes that the fourth indication information indicates at least one of the following:
the second terminal device sends CSI-RSs for the first terminal device to determine the target spatial domain receiving filter;
the second terminal device sends the multiple CSI-RSs using a same spatial domain transmission filter;
a repetition parameter of a CSI-RS resource set corresponding to CSI-RSs sent by the second terminal device is set to on; or
a report quantity associated with CSI-RSs sent by the second terminal device is set to none.

In other words, the fourth indication information indicating that CSI-RSs sent by the second terminal device are used for the first terminal device to determine the target spatial domain receiving filter, includes that the fourth indication information indicates at least one of the following:
the second terminal device is about to send a CSI-RS for the first terminal device to determine the target spatial domain receiving filter;
the second terminal device is about to send the multiple CSI-RSs using a same spatial domain transmission filter;
a repetition parameter of a CSI-RS resource set corresponding to CSI-RSs to be sent by the second terminal device is set to on; or
a report quantity associated with CSI-RSs to be sent by the second terminal device is set to none.

Of course, when the fourth indication information indicates that CSI-RSs sent by the second terminal device are used to measure the channel state information; or when the fourth indication information indicates that CSI-RSs sent by the second terminal device are used to determine the target spatial domain transmission filter for the second terminal device to perform sidelink data transmission, the indication may be made in a similar manner, which is not specifically limited in the present disclosure.

Optionally, the fourth indication information may indirectly indicate the purpose or use of the second terminal device sending CSI-RSs by indicating the setting of repetition parameter of the CSI-RS resource set corresponding to CSI-RSs sent by the second terminal device.

In other words, after receiving the fourth indication information, the first terminal device may reflect or indicate, based on the repetition parameter of the CSI-RS resource set used by the second terminal device, whether CSI-RSs sent by the second terminal device are used to determine an optimal spatial domain transmission filter or an optimal spatial domain receiving filter.

For example, it is assumed that the at least one CSI-RS resource set configured through the resource pool configuration information or the BWP configuration information includes 2 CSI-RS resource sets, herein a repetition parameter in one CSI-RS resource set is off, and a repetition parameter in the other CSI-RS resource set is on. When the fourth indication information indicates that the CSI-RS resource set corresponding to CSI-RSs sent by the second terminal device is the CSI-RS resource set with the repetition parameter set to off, the first terminal device may assume that the second terminal device sends the CSI-RS resources using different spatial domain transmission filters. Therefore, the first terminal device may perform measurements according to CSI-RSs and feed back a preferred CSI-RS resource index and/or measurement result, so that the second terminal device determines the preferred spatial domain transmission filter. When the fourth indication information indicates that the CSI-RS resource set corresponding to CSI-RSs sent by the second terminal device is the CSI-RS resource set with the repetition parameter set to on, the first terminal device may assume that the second terminal device uses the same spatial domain transmission filter to send the CSI-RS resources. Therefore, the first terminal device may use different spatial domain receiving filters to receive CSI-RSs respectively, measure CSI-RSs, and select the optimal spatial domain receiving filter based on the measurement results, thereby realizing the selection process of the spatial domain receiving filter.

Briefly, the fourth indication information indicates that the CSI-RS resource set corresponding to CSI-RSs sent by the second terminal device is a CSI-RS resource set with a repetition parameter set to on, and when the repetition parameter is set to on, it represents that the sent CSI-RSs are sent using the same spatial domain transmission filter, i.e., using the same spatial domain transmission filter to send CSI-RSs. Similarly, the fourth indication information indicates that the CSI-RS resource set corresponding to CSI-RSs sent by the second terminal device is a CSI-RS resource set with a repetition parameter set to off, and when the repetition parameter is set to off, it represents that the sent CSI-RSs are not sent using the same spatial domain transmission filter, i.e., using different spatial domain transmission filters to send CSI-RSs. When the second terminal device uses the same spatial domain transmission filter to send CSI-RSs, the first terminal device may use different spatial domain receiving filters to receive CSI-RSs, measure the different CSI-RSs, and select the optimal spatial domain receiving filter as the target spatial domain receiving filter.

Optionally, the fourth indication information may indirectly indicate the purpose or use of the second terminal device sending CSI-RSs by indicating the report quantity associated with CSI-RSs sent by the second terminal device.

In other words, after receiving the fourth indication information, the first terminal device may embody or indicate, based on the report quantity associated with CSI-RSs sent by the second terminal device, whether CSI-RSs sent by the second terminal device are used to determine an optimal spatial domain transmission filter or an optimal spatial domain receiving filter.

For example, it is assumed that the at least one CSI-RS resource set configured through the resource pool configuration information or the BWP configuration information includes 2 CSI-RS resource sets, and a respective CSI report quantity associated with each CSI-RS resource set is configured, a CSI report quantity associated with a first CSI-RS resource set is RSRP, and a CSI report quantity associated with a second CSI-RS resource set is none. When the fourth indication information sent by the second terminal device to the first terminal device indicates that the CSI-RS report quantity is RSRP, i.e., it represents that the second terminal device will send CSI-RSs in a first CSI-RS resource set, at this time, the first terminal device may assume that the second terminal device sends the CSI-RS resources using different spatial domain transmission filters. Therefore, the first terminal device may make measurements according to CSI-RSs and feed back a preferred CSI-RS resource index and/or measurement result, so that the second terminal device determines the preferred spatial domain transmission filter. When the fourth indication information sent by the second terminal device to the first terminal device indicates that the CSI-RS report quantity is none, i.e., it represents that the second terminal device will send CSI-RS resources in a second CSI-RS resource set, at this time, the first terminal device may assume that the second terminal device uses the same spatial domain transmission filter to send the CSI-RS resources. Therefore, the first terminal device may use different spatial domain receiving filters to receive CSI-RSs respectively, measure CSI-RSs, and select the optimal spatial domain receiving filter based on the measurement results, thereby realizing the selection process of the spatial domain receiving filter.

Optionally, the fourth indication information is carried in at least one of the following: SCI, MAC CE or PC5 RRC.

In some embodiments, the method 200 may further include that: fifth indication information sent by the second terminal device is received, where the fifth indication information indicates a delay boundary.

In other words, the second terminal device sends the fifth indication information to the first terminal device. Correspondingly, after receiving the fifth indication information, the first terminal device may receive the multiple CSI-RSs based on the delay boundary indicated by the fifth indication information.

Optionally, S210 may include that: in response to exceeding the delay boundary, stop receiving the multiple CSI-RSs.

Herein the measurement results of the multiple CSI-RSs include at least one measurement result of at least one CSI-RS already received in the multiple CSI-RSs.

In other words, after exceeding the delay boundary, the first terminal device may determine the target spatial domain receiving filter based on the CSI-RS measurements.

That is, when exceeding the time delay boundary, even if the first terminal device does not receive CSI-RSs sent by the second terminal device using a certain spatial domain receiving filter, the first terminal device assumes that the second terminal device has already sent CSI-RSs to the first terminal device, thus avoiding meaningless reception by the first terminal device using the certain spatial domain receiving filter, reducing the power consumption of the device and improving the utilization rate of the spatial domain receiving filter.

Optionally, the fifth indication information is carried in at least one of the following: SCI, MAC CE or PC5 RRC.

In some embodiments, the method 200 may further include that: sixth indication information sent by the second terminal device is received, where the sixth indication information indicates multiple transmission resources corresponding to the multiple CSI-RSs.

In other words, the second terminal device sends the sixth indication information to the first terminal device. After receiving the sixth indication information, the first terminal device receives the multiple CSI-RSs based on the multiple transmission resources indicated by the sixth indication information. That is, the second terminal device sends information of transmission resources to the first terminal device, so that the first terminal device may be aware of the resources to be used by the second terminal device for CSI-RS sending, therefore CSI-RSs sent by the second terminal device may be received using different spatial domain receiving filters.

Optionally, the multiple CSI-RSs are in one-to-one correspondences with the multiple transmission resources.

It should be noted that the transmission resources involved in the present disclosure may be any resources used for transmitting CSI-RSs in the time domain, such as time domain symbols, slots or subframes, etc.

Optionally, S210 may include that: the multiple CSI-RSs are received on the multiple transmission resources using the multiple spatial domain receiving filters respectively.

Optionally, the multiple transmission resources are acquired by the second terminal device through listening, or the multiple transmission resources are acquired by the second terminal device from a network device.

Optionally, a priority corresponding to the multiple CSI-RSs is a highest priority.

Optionally, the first terminal device expects the second terminal device to send the multiple CSI-RSs using the multiple transmission resources; or the first terminal device does not expect the second terminal device to perform resource reselection on the multiple transmission resources; or the second terminal device does not perform resource reselection on the multiple transmission resources; or the second terminal device does not perform re-evaluation detection and pre-emption detection on the multiple transmission resources.

In other words, after the second terminal device determines the transmission resources for sending CSI-RSs, the second terminal device does not perform the resource reselection until it has finished sending CSI-RSs.

For example, the second terminal device acquires transmission resources for sending CSI-RSs from the network device, and the second terminal device sends the sixth indication information to the first terminal device for indicating the transmission resources. The first terminal device may use different spatial domain receiving filters to receive different transmission resources respectively based on the sixth indication information.

For another example, the second terminal device acquires transmission resources for sending CSI-RSs through listening, and the second terminal device sends the sixth indication information to the first terminal device for indicating the transmission resources. Before the second terminal device finishes sending the CSI-RSs, the second terminal device does not perform the resource reselection, that is, the priority of sending CSI-RSs is set to be the highest priority, so that the corresponding transmission resources will not be preempted by other terminals; or the re-evaluation and resource pre-emption mechanism is deactivated, so as to ensure that the resources selected by the second terminal device will not change due to the occurrence of resources, so that the first terminal device may use different spatial domain receiving filters to receive different transmission resources respectively.

Of course, in other alternative embodiments, when a certain resource of the second terminal device is preempted by other users or changed, the second terminal device may give up using the resource or reselect a resource based on the resource to send CSI-RSs. At this time, the first terminal device may not detect the SCI sent by the second terminal device on the resource using a certain spatial domain receiving filter, so the CSI-RS may not be detected. Therefore, the first terminal device will not select the spatial domain receiving filter corresponding to the resource.

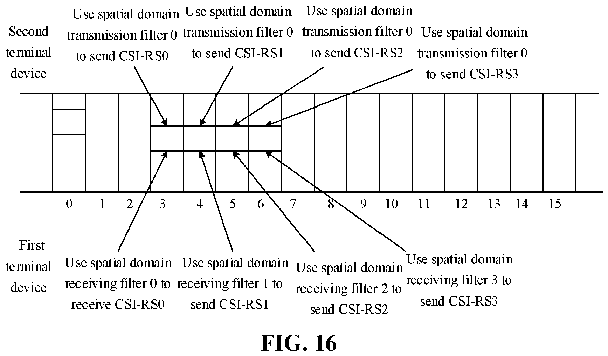

FIG. 16 is a schematic diagram of a first terminal device receiving multiple CSI-RSs on multiple transmission resources using multiple spatial domain receiving filters according to an embodiment of the present disclosure.

As illustrated in FIG. 16, the second terminal device obtains transmission resources for sending CSI-RSs, and sends the sixth indication information to the first terminal device in a slot 0 for indicating a resource (i.e., a transmission resource located in slot 3/4/5/6) for sending CSI-RSs, and there is no resource reselection during the second terminal device sending CSI-RSs. Correspondingly, the first terminal device may determine, based on the sixth indication information, a resource on which the second terminal device will send CSI-RSs, so that the first terminal device receives the corresponding transmission resources using different spatial domain receiving filters.

Optionally, the sixth indication information is carried in at least one of the following: SCI, MAC CE or PC5 RRC.

In some embodiments, the S230 may include the following operations;
at least one candidate spatial domain receiving filter is determined from the multiple spatial domain receiving filters based on the measurement results of the multiple CSI-RSs; and
a target spatial domain receiving filter is determined from the at least one candidate spatial domain receiving filter.

In other words, the measurement results of the multiple CSI-RSs are used to determine at least one candidate spatial domain receiving filter from the multiple spatial domain receiving filters, and the target spatial domain receiving filter is any one of the at least one candidate spatial domain receiving filter. Of course, in other alternative embodiments, the first terminal device may also determine the target spatial domain receiving filter directly from the multiple spatial domain receiving filters based on the measurement results of the multiple CSI-RSs.

It should be noted that when the first terminal device supports M spatial domain receiving filters, the second terminal device will use the same spatial domain transmission filter to send M CSI-RSs, therefore the first terminal device may use M spatial domain receiving filters to receive corresponding CSI-RS respectively. However, due to the half-duplex limitation, or the lack of alignment between the spatial domain transmission filter and the spatial domain receiving filter, the first terminal device may only detect a part of the SCI sent by the second terminal device, and then can only measure the CSI-RSs scheduled by the part of the SCI. N optimal measurement results are selected from the measurement results, and the receiving beams corresponding to the N measurement results are taken as candidate spatial domain receiving filters. Preferably, N=1, that is, the first terminal device takes a spatial domain receiving filter corresponding to the optimal measurement result as the optimal spatial domain receiving filter.

Optionally, at least one spatial domain receiving filter corresponding to at least one CSI-RS with measurement result greater than or equal to a first threshold is determined as the at least one candidate spatial domain receiving filter based on the measurement results of the multiple CSI-RSs.

In other words, only when the first terminal device detects the CSI-RS resource and a corresponding measurement result exceeds the threshold, the first terminal device will take a spatial domain receiving filter corresponding to the measurement result as the candidate spatial domain receiving filter.

Optionally, the first threshold is configured by a network device, or indicated by the second terminal device, or pre-configured.

Optionally, a spatial domain receiving filter corresponding to a CSI-RS with the optimal measurement result is determined as the target spatial domain receiving filter based on an order of the measurement results from high to low among the at least one candidate spatial domain receiving filter.

In some embodiments, S220 may further include that: the multiple CSI-RSs are measured to obtain layer-1 measurement results of the multiple CSI-RSs.

In other words, the first terminal device utilizes different spatial domain receiving filters to measure CSI-RSs sent by the second terminal device, such as to measure RSRP or SINR, etc. Since the measurement and selection are aimed at the optimal spatial domain receiving filter, the measurement result does not need to be filtered at layer 3, that is, the measurement results of measuring the multiple CSI-RSs may be the layer-1 measurement results, otherwise additional time delay will be caused.

In some embodiments, the measurement results include at least one of sidelink reference signal receiving power (RSRP) or sidelink signal to interference-plus-noise ratio (SINR).

In some embodiments, the method 200 may further include that: seventh indication information sent by the second terminal device is received, where the seventh indication information indicates a resource index corresponding to each received CSI-RS.

Optionally, the resource index may be an index of a CSI-RS resource.

Optionally, SCI sent by the second terminal device is received, where the SCI includes the seventh indication information.

In other words, the second terminal device determines a CSI-RS resource set, determines a CSI-RS resource in the CSI-RS resource set, sends the multiple CSI-RSs respectively using the same spatial domain transmission filter, and indicates an index of the corresponding CSI-RS resource in the SCI. For example, the resource pool configuration information or the sidelink BWP configuration information is used for configuring A CSI-RS resource sets, from which the second terminal device selects at least one CSI-RS resource set and sends CSI-RSs in the at least one CSI-RS resource set through the spatial domain transmission filter. At this time, the second terminal device carries the index of the at least one CSI-RS resource set and the index of the CSI-RS resource in the SCI.

It is noted that in the present embodiment, the second terminal device utilizes the same spatial domain transmission filter to send CSI-RSs in turn, which is embodied as the second terminal device utilizing the same spatial domain transmission filter to send different CSI-RS resources, and the first terminal device utilizing different spatial domain receiving filters to receive different CSI-RSs sent by the second terminal device respectively, i.e., the first terminal device determines the correspondences between the CSI-RS resources and different spatial domain receiving filters, and the first terminal device may determine the corresponding spatial domain receiving filter based on the index of the CSI-RS resource. The second terminal device may indicate TCI to the first terminal device during sidelink transmission, where the TCI includes information of the CSI-RS resource and QCL Type-D. The first terminal device may determine to use the spatial domain receiving filter corresponding to the CSI-RS resource to receive sidelink data based on the information of the CSI-RS resource indicated in the TCI and the correspondences between the CSI-RS resources and the spatial domain receiving filters.

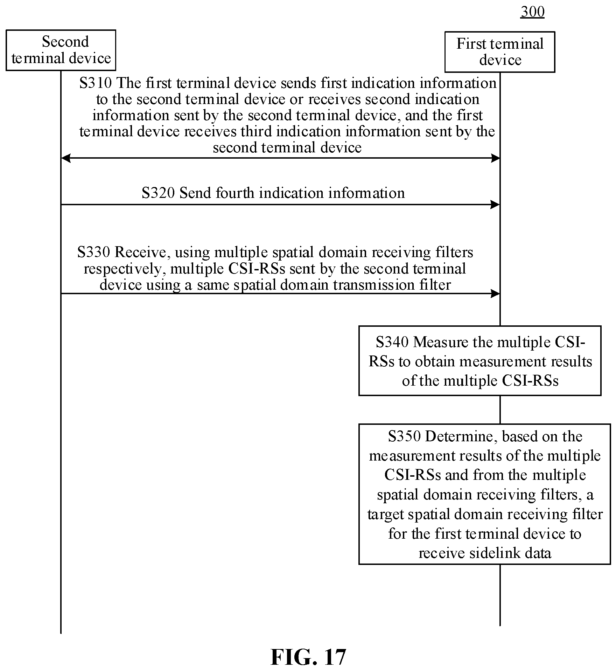

FIG. 17 is a schematic flowchart of a wireless communication method 300 according to an embodiment of the present disclosure.

As illustrated in FIG. 17, the method 300 may include the following operations.

In S310, a first terminal device sends first indication information to a second terminal device or receives second indication information sent by the second terminal device, and the first terminal device receives third indication information sent by the second terminal device.

In S320, fourth indication information is sent.

In S330, multiple CSI-RSs sent by the second terminal device using a same spatial domain transmission filter are received using multiple spatial domain receiving filters respectively.

In S340, the multiple CSI-RSs are measured to obtain measurement results of the multiple CSI-RSs.

In S350, a target spatial domain receiving filter for the first terminal device to perform sidelink data reception is determined from the multiple spatial domain receiving filters based on the measurement results of the multiple CSI-RSs.

In the present embodiment, the second terminal device sends different CSI-RSs in turn to the first terminal device through the same spatial domain transmission filter and indicates corresponding CSI-RS resources. The first terminal device receives CSI-RSs using different spatial domain receiving filters respectively, measures the received CSI-RSs, and determines, from the multiple spatial domain receiving filters, the target spatial domain receiving filter for the first terminal device to perform the sidelink data reception.

It should be noted that the interaction of the first indication information, the second indication information and the third indication information between the second terminal device and the first terminal device may be understood as the interaction of sidelink configuration information. In other words, the second terminal device may send sidelink configuration information to the first terminal device, or the first terminal device may send sidelink configuration information to the second terminal device. The various sidelink configuration information described above may be carried in one or more sidelink configuration signaling, which is not limited in the present embodiment.

In addition, related terms and implementations in the method 300 may refer to related solutions in the method 200, which will not be repeated herein to avoid repetition.

In addition, the method 200 and the method 300 are only examples of the present disclosure, and the process of determining the target spatial domain receiving filter may only include all or part of the operations of the method 200 or 300. One or more of the above-mentioned operations may be combined into one step, which is not specifically limited in the present disclosure.

Preferred embodiments of the present disclosure are described in detail in conjunction with the accompanying drawings. However, the present disclosure is not limited to the specific details of the above implementations. Within the scope of the technical conception of the present disclosure, various simple modifications may be made to the technical solution of the present disclosure, and these simple modifications all belong to the scope of protection of the present disclosure. For example, each of the specific technical features described in the above specific implementations may be combined in any suitable manner without conflict, and various possible combinations are not further described in the present disclosure in order to avoid unnecessary repetition. For another example, various different implementations of the present disclosure may be arbitrarily combined, so long as it does not depart from the idea of the present disclosure and it should also be considered as the content of the present disclosure.

It should also be understood that in various method embodiments of the present disclosure, the size of the sequence number of the above processes does not mean the order of execution, and the execution order of each process should be determined according to its function and inherent logic, and should not constitute any limitation on the implementation of embodiments of the present disclosure. Further, in embodiments of the present disclosure, the terms "downlink" and "uplink" represent the transmission direction of the signal or data, herein "downlink" represents that the transmission direction of the signal or data is a first direction sent from a site to a user device of a cell, and "uplink" represents that the transmission direction of the signal or data is a second direction sent from the user device of the cell to the site, for example, "downlink signal" represent that the transmission direction of the signal is the first direction. In addition, in embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, character "/" in the present disclosure usually represents that previous and next associated objects form an "or" relationship.

Method embodiments of the present disclosure are described in detail above in conjunction with the accompanying drawings, and apparatus embodiments of the present disclosure are described in detail below in conjunction with FIG. 25 to FIG. 28.

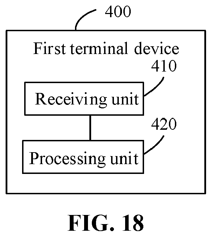

FIG. 18 is a schematic block diagram of a first terminal device 400 according to an embodiment of the present disclosure.

As illustrated in FIG. 18, the first terminal device 400 includes a receiving unit 410 and a processing unit 420.

The receiving unit 410 is configured to receive multiple channel state information reference signals (CSI-RSs) using multiple spatial domain receiving filters respectively.

The processing unit 420 is configured to:
measure the multiple CSI-RSs to obtain measurement results of the multiple CSI-RSs; and
determine, based on the measurement results of the multiple CSI-RSs and from the multiple spatial domain receiving filters, a target spatial domain receiving filter for a first terminal device to receive sidelink data.

In some embodiments, the receiving unit 410 is specifically configured to receive, using the multiple spatial domain receiving filters respectively, the multiple CSI-RSs sent by a second terminal device using a same spatial domain transmission filter.

In some embodiments, the receiving unit 410 is further used to send first indication information to the second terminal device.

Herein, the first indication information indicates a number of the multiple spatial domain receiving filters.

In some embodiments, the multiple spatial domain receiving filters include at least one spatial domain receiving filter of the first terminal device operable for sidelink data reception.

In some embodiments, the first indication information is carried in at least one of the following: sidelink control information (SCI), a media access control control element (MAC CE), or a PC5 radio resource control (RRC).

In some embodiments, the receiving unit 410 is further used to receive second indication information sent by the second terminal device.

Herein, the second indication information indicates a maximum number of CSI-RSs sent by the second terminal device; or the second indication information indicates a maximum number of CSI-RS resources corresponding to CSI-RSs sent by the second terminal device.

In some embodiments, the maximum number is greater than or equal to a number of the multiple CSI-RSs.

The second indication information indicating the maximum number of CSI-RS resources corresponding to CSI-RSs sent by the second terminal device includes: the second indication information indicates a number of all CSI-RS resources in a CSI-RS resource set corresponding to CSI-RSs sent by the second terminal device.

In some embodiments, the second indication information is carried in at least one of the following: sidelink control information (SCI), a media access control control element (MAC CE), or a PC5 radio resource control (RRC).

In some embodiments, the receiving unit 410 is further used to receive third indication information sent by the second terminal device.

Herein the third indication information indicates at least one of the following: at least one CSI-RS resource set corresponding to the multiple CSI-RSs, or a CSI-RS resource corresponding to the multiple CSI-RSs in each of at least one CSI-RS resource set.

In some embodiments, the third indication information includes at least one of the following: an identifier of the at least one CSI-RS resource set, or an identifier of the CSI-RS resource corresponding to the multiple CSI-RSs in each of the at least one CSI-RS resource set.

In some embodiments, a repetition parameter of the at least one CSI-RS resource set is set to on.

In some embodiments, a report quantity associated with the at least one CSI-RS resource set is set to none.

In some embodiments, the third indication information is carried in at least one of the following: sidelink control information (SCI), a media access control control element (MAC CE), or a PC5 radio resource control (RRC).

In some embodiments, the receiving unit 410 is further used to:
acquire resource pool configuration information or sidelink bandwidth part (BWP) configuration information; where the resource pool configuration information or the BWP configuration information is used to configure at least one CSI-RS resource set or at least one CSI-RS resource; and
determine the at least one CSI-RS resource set based on the at least one CSI-RS resource set configured by the resource pool configuration information or the BWP configuration information.

In some embodiments, the at least one CSI-RS resource set configured by the resource pool configuration information or the BWP configuration information includes a first CSI-RS resource set and a second CSI-RS resource set, a repetition parameter of the first CSI-RS resource set is set to off, and a repetition parameter of the second CSI-RS resource set is set to on. The at least one CSI-RS resource set is determined according to the second CSI-RS resource set.

In some embodiments, the resource pool configuration information or the BWP configuration information includes at least one of the following:
an identifier of the at least one CSI-RS resource set;
a repetition parameter of the at least one CSI-RS resource set;
an identifier of the at least one CSI-RS resource;
a CSI report quantity;
an identifier of CSI report configuration;
a number N of time domain symbols occupied by a CSI-RS resource, herein N is an integer greater than or equal to 1;
information for determining time domain symbols for the at least one CSI-RS resource in a slot;
information for determining a location of a resource element (RE) or a sub-carrier of the at least one CSI-RS resource within a physical resource block (PRB).
a number of CSI-RS antenna ports; or
a CSI-RS density, which indicates a number of REs occupied by a CSI-RS of an antenna port in a PRB.

In some embodiments, the CSI-RS density is less than 1, and the CSI-RS resource configuration information further includes information indicating a PRB to which the at least one CSI-RS resource is mapped.

In some embodiments, the receiving unit 410 is further used to receive fourth indication information sent by the second terminal device.

Herein the fourth indication information indicates one of the following:
the CSI-RSs sent by the second terminal device are used to measure channel state information;
the CSI-RSs sent by the second terminal device are used to determine a target spatial domain transmission filter for the second terminal device to transmit sidelink data; or
the CSI-RSs sent by the second terminal device are used for the first terminal device to determine the target spatial domain receiving filter.

In some embodiments, the fourth indication information indicating that CSI-RSs sent by the second terminal device are used for the first terminal device to determine the target spatial domain receiving filter includes: the fourth indication information indicates at least one of the following:
the second terminal device sends CSI-RSs for the first terminal device to determine the target spatial domain receiving filter;
the second terminal device sends the multiple CSI-RSs using a same spatial domain transmission filter;
a repetition parameter of a CSI-RS resource set corresponding to CSI-RSs sent by the second terminal device is set to on; or
a report quantity associated with CSI-RSs sent by the second terminal device is set to none.

In some embodiments, the fourth indication information is carried in at least one of the following: sidelink control information (SCI), a media access control control element (MAC CE), or a PC5 radio resource control (RRC).

In some embodiments, the receiving unit 410 is further used to receive fifth indication information sent by the second terminal device, where the fifth indication information indicates a delay boundary.

In some embodiments, the receiving unit 410 is specifically used to: in response to exceeding the delay boundary, stop receiving the multiple CSI-RSs.

Herein the measurement results of the multiple CSI-RSs include at least one measurement result of at least one CSI-RS already received in the multiple CSI-RSs.

In some embodiments, the fifth indication information is carried in at least one of the following: sidelink control information (SCI), a media access control control element (MAC CE), or a PC5 radio resource control (RRC).

In some embodiments, the receiving unit 410 is further used to receive sixth indication information sent by the second terminal device, where the sixth indication information indicates multiple transmission resources corresponding to the multiple CSI-RSs.

In some embodiments, the receiving unit 410 is specifically used to receive the multiple CSI-RSs on the multiple transmission resources using the multiple spatial domain receiving filters respectively.

In some embodiments, the multiple transmission resources are acquired by the second terminal device through listening, or the multiple transmission resources are acquired by the second terminal device from a network device.

In some embodiments, a priority corresponding to the multiple CSI-RSs is a highest priority.

In some embodiments, the first terminal device expects the second terminal device to send the multiple CSI-RSs using the multiple transmission resources respectively; or the first terminal device does not expect the second terminal device to perform resource reselection on the multiple transmission resources; or the second terminal device does not perform resource reselection on the multiple transmission resources; or the second terminal device does not perform re-evaluation detection and pre-emption detection on the multiple transmission resources.

In some embodiments, the sixth indication information is carried in at least one of the following: sidelink control information (SCI), a media access control control element (MAC CE), or a PC5 radio resource control (RRC).

In some embodiments, the processing unit 420 is specifically used to:
determine at least one candidate spatial domain receiving filter from the multiple spatial domain receiving filters based on the measurement results of the multiple CSI-RSs; and
determine the target spatial domain receiving filter from the at least one candidate spatial domain receiving filter.

In some embodiments, the processing unit 420 is specifically used to:
determine at least one spatial domain receiving filter corresponding to at least one CSI-RS with measurement result greater than or equal to a first threshold as the at least one candidate spatial domain receiving filter based on the measurement results of the multiple CSI-RSs.

In some embodiments, the first threshold is configured by a network device, or indicated by the second terminal device, or pre-configured.

In some embodiments, the processing unit 420 is specifically used to:
determine, from the at least one candidate spatial domain receiving filter, a spatial domain receiving filter corresponding to a CSI-RS with an optimal measurement result as the target spatial domain receiving filter based on an order of at least one measurement result of the at least one candidate spatial domain receiving filter from high to low.

In some embodiments, the processing unit 420 is specifically used to measure the multiple CSI-RSs to obtain layer-1 measurement results of the multiple CSI-RSs.

In some embodiments, the measurement results include at least one of sidelink reference signal receiving power (RSRP) or sidelink signal to interference-plus-noise ratio (SINR).

In some embodiments, the receiving unit 410 is further used to receive seventh indication information sent by the second terminal device, where the seventh indication information indicates a resource index corresponding to each received CSI-RS.

In some embodiments, the receiving unit 410 is specifically used to receive sidelink control information (SCI) sent by the second terminal device, where the SCI includes the seventh indication information.

It should be understood that apparatus embodiments and method embodiments may correspond to each other, and similar descriptions may refer to method embodiments. In particular, the first terminal device 400 illustrated in FIG. 18 may correspond to a respective body in the method 200 or 300 performing an embodiment of the present disclosure, and the aforementioned and other operations and/or functions of various units in the first terminal device 400 are used to implement the respective flow in various methods in FIG. 13 or FIG. 17 respectively, which are not repeated here for the sake of brevity.

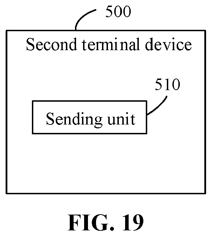

FIG. 19 is a schematic block diagram of a second terminal device 500 according to an embodiment of the present disclosure.

As illustrated in FIG. 19, the second terminal device 500 includes a sending unit 510.

The sending unit 510 is configured to send multiple channel state information reference signals (CSI-RSs) to a first terminal device respectively using a same spatial domain transmission filter.

Herein the multiple CSI-RSs are used for the first terminal device to determine a target spatial domain receiving filter for sidelink data reception from multiple spatial domain receiving filters.

In some embodiments, the sending unit 510 is further used to receive first indication information sent by the first terminal device.

Herein, the first indication information indicates a number of the multiple spatial domain receiving filters.

In some embodiments, the multiple spatial domain receiving filters include at least one spatial domain receiving filter of the first terminal device operable for sidelink data reception.

In some embodiments, the first indication information is carried in at least one of the following: sidelink control information (SCI), a media access control control element (MAC CE), or a PC5 radio resource control (RRC).

In some embodiments, the sending unit 510 is further used to send second indication information to the first terminal device.

Herein the second indication information indicates a maximum number of the CSI-RSs sent by the second terminal device; or the second indication information indicates a maximum number of CSI-RS resources corresponding to the CSI-RSs sent by the second terminal device.

In some embodiments, the maximum number is greater than or equal to a number of the multiple CSI-RSs.

In some embodiments, the second indication information indicating the maximum number of CSI-RS resources corresponding to CSI-RSs sent by the second terminal device includes: the second indication information indicates a number of all CSI-RS resources in a CSI-RS resource set corresponding to CSI-RSs sent by the second terminal device.

In some embodiments, the second indication information is carried in at least one of the following: sidelink control information (SCI), a media access control control element (MAC CE), or a PC5 radio resource control (RRC).

In some embodiments, the sending unit 510 is further used to send third indication information to the first terminal device.

Herein the third indication information indicates at least one of the following: at least one CSI-RS resource set corresponding to the multiple CSI-RSs, or a CSI-RS resource corresponding to the multiple CSI-RSs in each of at least one CSI-RS resource set.

In some embodiments, the third indication information includes at least one of the following: an identifier of the at least one CSI-RS resource set, or an identifier of the CSI-RS resource corresponding to the multiple CSI-RSs in each of the at least one CSI-RS resource set.

In some embodiments, a repetition parameter of the at least one CSI-RS resource set is set to on.

In some embodiments, a report quantity associated with the at least one CSI-RS resource set is set to none.

In some embodiments, the third indication information is carried in at least one of the following: sidelink control information (SCI), a media access control control element (MAC CE), or a PC5 radio resource control (RRC).

In some embodiments, the sending unit 510 is further used to:
acquire resource pool configuration information or sidelink bandwidth part (BWP) configuration information, where the resource pool configuration information or the BWP configuration information is used to configure at least one CSI-RS resource set or at least one CSI-RS resource; and
determine the at least one CSI-RS resource set based on the at least one CSI-RS resource set configured by the resource pool configuration information or the BWP configuration information.

In some embodiments, the at least one CSI-RS resource set configured by the resource pool configuration information or the BWP configuration information includes a first CSI-RS resource set and a second CSI-RS resource set, a repetition parameter of the first CSI-RS resource set is set to off, and a repetition parameter of the second CSI-RS resource set is set to on. The at least one CSI-RS resource set is determined according to the second CSI-RS resource set.

In some embodiments, the resource pool configuration information or the BWP configuration information includes at least one of the following:
an identifier of the at least one CSI-RS resource set;
a repetition parameter of the at least one CSI-RS resource set;
an identifier of the at least one CSI-RS resource;
a CSI report quantity;
an identifier of CSI report configuration;
a number N of time domain symbols occupied by a CSI-RS resource, herein N is an integer greater than or equal to 1;
information for determining time domain symbols for the at least one CSI-RS resource in a slot;
information for determining a location of a resource element (RE) or a sub-carrier of the at least one CSI-RS resource within a physical resource block (PRB);
a number of CSI-RS antenna ports; or
a CSI-RS density, which indicates a number of REs occupied by a CSI-RS of an antenna port in a PRB.

In some embodiments, the CSI-RS density is less than 1, and the CSI-RS resource configuration information further includes information indicating a PRB to which the at least one CSI-RS resource is mapped.

In some embodiments, the sending unit 510 is further used to send fourth indication information to the first terminal device.

Herein the fourth indication information indicates that CSI-RSs sent by the second terminal device are used to measure channel state information; or the fourth indication information indicates that CSI-RSs sent by the second terminal device are used to determine a target spatial domain transmission filter for the second terminal device to transmit sidelink data; or the fourth indication information indicates that CSI-RSs sent by the second terminal device are used for the first terminal device to determine the target spatial domain receiving filter.

In some embodiments, the fourth indication information indicating that CSI-RSs sent by the second terminal device are used for the first terminal device to determine the target spatial domain receiving filter includes: the fourth indication information indicates at least one of the following:
the second terminal device sends CSI-RSs for the first terminal device to determine the target spatial domain receiving filter;
the second terminal device sends the multiple CSI-RSs using a same spatial domain transmission filter;
a repetition parameter of a CSI-RS resource set corresponding to CSI-RSs sent by the second terminal device is set to on; or
a report quantity associated with CSI-RSs sent by the second terminal device is set to none.

In some embodiments, the fourth indication information is carried in at least one of the following: sidelink control information (SCI), a media access control control element (MAC CE), or a PC5 radio resource control (RRC).

In some embodiments, the sending unit 510 is further used to send fifth indication information to the first terminal device, where the fifth indication information indicates a delay boundary.

In some embodiments, the sending unit 510 is specifically used to: in response to exceeding the delay boundary, stop sending the multiple CSI-RSs.

In some embodiments, the fifth indication information is carried in at least one of the following: sidelink control information (SCI), a media access control control element (MAC CE), or a PC5 radio resource control (RRC).

In some embodiments, the sending unit 510 is further used to send sixth indication information to the first terminal device, where the sixth indication information indicates multiple transmission resources corresponding to the multiple CSI-RSs.

In some embodiments, the sending unit 510 is specifically used to send the multiple CSI-RSs on the multiple transmission resources using the same spatial domain transmission filter.

In some embodiments, the multiple transmission resources are acquired by the second terminal device through listening, or the multiple transmission resources are acquired by the second terminal device from a network device.

In some embodiments, a priority corresponding to the multiple CSI-RSs is a highest priority.

In some embodiments, the first terminal device expects the second terminal device to send the multiple CSI-RSs using the multiple transmission resources respectively; or the first terminal device does not expect the second terminal device to perform resource reselection on the multiple transmission resources; or the second terminal device does not perform resource reselection on the multiple transmission resources; or the second terminal device does not perform re-evaluation detection and pre-emption detection on the multiple transmission resources.

In some embodiments, the sixth indication information is carried in at least one of the following: sidelink control information (SCI), a media access control control element (MAC CE), or a PC5 radio resource control (RRC).

In some embodiments, the sending unit 510 is further used to send seventh indication information to the first terminal device, where the seventh indication information indicates a resource index corresponding to each sent CSI-RS.

In some embodiments, the sending unit 510 is specifically used to send sidelink control information SCI to the first terminal device, where the SCI includes the seventh indication information.

It should be understood that apparatus embodiments and method embodiments may correspond to each other, and similar descriptions may refer to method embodiments. In particular, the second terminal device 500 illsutrated in FIG. 19 may correspond to a respective body in the method 200 or 300 performing an embodiment of the present disclosure, and the aforementioned and other operations and/or functions of various units in the second terminal device 500 are used to implement the respective flow in various methods in FIG. 13 or FIG. 17 respectively, which are not repeated here for the sake of brevity.

The communication device of embodiments of the present disclosure is described above from the perspective of functional modules in conjunction with the accompanying drawings. It should be understood that the functional modules may be implemented in hardware form, or implemented by instructions in software form, or implemented by a combination of hardware and software modules. In particular, each step of the method embodiment in embodiments of the present disclosure may be completed by the integrated logic circuits of the hardware in the processor and/or the instructions in the form of software, and the steps of the method disclosed in combination with embodiments of the present disclosure may be directly embodied as being performed by a hardware decoding processor or a combination of the hardware and software modules in the decoding processor. Optionally, the software modules may be located in RAM, flash memory, read-only memory (ROM), programmable ROM (PROM), electrically erasable programmable memory, registers and other well-established storage medium in the art. The storage medium is located in the memory, and the processor reads the information in the memory and completes the steps in the above method embodiments in conjunction with its hardware.

For example, the acquisition unit 310, the transmission unit 320, and the sending unit 410 referred to above may all be implemented by a transceiver.

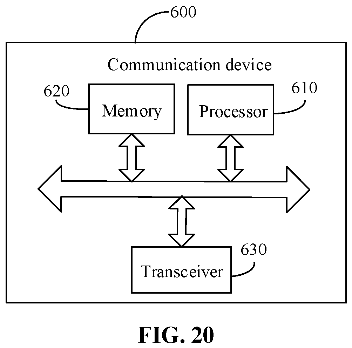

FIG. 20 is a schematic structural diagram of a communication device 600 according to an embodiment of the present disclosure.

As illustrated in FIG. 20, the communication device 600 includes a processor 610.

Herein, the processor 610 may invoke and run a computer program from a memory to implement the method in embodiments of the present disclosure.

As illustrated in FIG. 20, the communication device 600 also includes a memory 620.

Herein, the memory 620 may be used to store indication information and may also be used to store codes, instructions and the like executed by the processor 610. Herein, the processor 610 may invoke and run a computer program from the memory 620 to implement the method in embodiments of the present disclosure. The memory 620 may be a separate device independent of the processor 610, or may be integrated into the processor 610.

As illustrated in FIG. 20, the communication device 600 also includes a transceiver 630.

Herein, the processor 610 may control the transceiver 630 to communicate with other devices, and in particular, may send information or data to or receive information or data sent from other devices. The transceiver 630 may include a transmitter and a receiver. The transceiver 630 may further include one or more antennas.

It should be understood that the various components in the communication device 600 are connected by a bus system. The bus system includes a power bus, a control bus, and a status signal bus in addition to a data bus.

It should also be understood that the communication device 600 may be the first terminal device of embodiments of the present disclosure, and the communication device 600 may implement the corresponding processes implemented by the first terminal device in various methods of embodiments of the present disclosure. That is, the communication device 600 of embodiments of the present disclosure may correspond to the first terminal device 400 in embodiments of the present disclosure, and may correspond to the corresponding entity for performing the method 200 or 300 according to embodiments of the present disclosure, which will not be repeated here for the sake of brevity. Similarly, the communication device 600 may be the second terminal device of embodiments of the present disclosure, and the communication device 600 may implement the corresponding processes implemented by the second terminal device in various methods of embodiments of the present disclosure. That is to say, the communication device 600 of embodiments of the present disclosure may correspond to the second terminal device 500 in embodiments of the present disclosure, and may correspond to the corresponding entity for performing the method 200 or 300 according to embodiments of the present disclosure, which will not be repeated here for the sake of brevity.

In addition, an embodiment of the present disclosure also provides a chip.

For example, the chip may be an integrated circuit chip with a signal processing capability that may implement or perform the various methods, steps and logic diagrams disclosed in embodiments of the present disclosure. The chip may also be referred to as a system level chip, a system on chip, a chip system, or a system-on-chip, etc. Optionally, the chip may be applied to various communication devices, so that the communication devices mounted with the chip may perform various methods, steps and logic block diagrams disclosed in embodiments of the present disclosure.

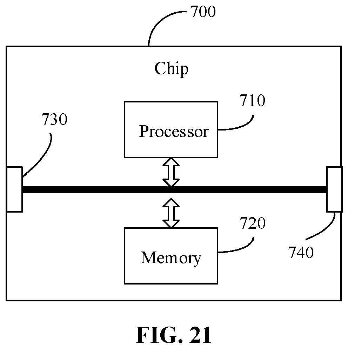

FIG. 21 is a schematic structural diagram of a chip 700 according to an embodiment of the present disclosure.

As illustrated in FIG. 21, the chip 700 includes a processor 710.

Herein, the processor 710 may invoke and run a computer program from a memory to implement the method in embodiments of the present disclosure.

As illustrated in FIG. 21, the chip 700 may also include a memory 720.

Herein, the processor 710 may invoke and run a computer program from the memory 720 to implement the method in embodiments of the present disclosure. The memory 720 may be used to store indication information and may also be used to store codes, instructions and the like executed by the processor 710. The memory 720 may be a separate device independent of the processor 710, or may be integrated into the processor 710.

As illustrated in FIG. 21, the chip 700 may also include an input interface 730.

Herein, the processor 710 may control the input interface 730 to communicate with other devices or chips, and in particular, may acquire information or data sent from other devices or chips.

As illustrated in FIG. 21, the chip 700 may also include an output interface 740.

Herein, the processor 710 may control the output interface 740 to communicate with other devices or chips, and in particular, may output information or data to other devices or chips.

It should be understood that the chip 700 may be applied to the first terminal device or the second terminal device of embodiments of the present disclosure. In other words, this chip may implement the corresponding processes implemented by the first terminal device in various methods of embodiments of the present disclosure, and may implement the corresponding processes implemented by the second terminal device in various methods of embodiments of the present disclosure, which will not be repeated here for the sake of brevity.

It should also be understood that the various components in the chip 700 are connected by a bus system, and the bus system includes a power bus, a control bus, and a status signal bus in addition to a data bus.

The processor above may include, but is not limited to the following.

General purpose processor, digital signal processor (DSP), application specific integrated circuit (ASIC), field programmable gate array (FPGA) or other programmable logic devices, discrete gate or transistor logic devices, discrete hardware components and so on.

The processor may be used to implement or perform the various methods, steps and logic diagrams disclosed in embodiments of the present disclosure. The steps of the method disclosed in combination with embodiments of the present disclosure may be directly embodied as being performed by a hardware decoding processor or a combination of the hardware and software modules in the decoding processor. The software modules may be located in RAM, flash memory, ROM, PROM, erasable programmable memory, registers and other well-established storage medium in the art. The storage medium is located in the memory, and the processor reads the information in the memory and completes the steps in the above methods in conjunction with its hardware.

The memory referred to above includes, but is not limited to the following.

Volatile memory and/or non-volatile memory. Herein, the non-volatile memory may be ROM, PROM, erasable PROM (EPROM), electrically EPROM (EEPROM), or flash memory. The volatile memory may be a random access memory (RAM) which serves as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct rambus RAM (DR RAM).

It should be noted that the memory described in the present disclosure is intended to include these and any other suitable types of memory.

Embodiments of the present disclosure also provide a computer-readable storage medium for storing a computer program. The computer-readable storage medium stores one or more programs including instructions that, when executed by a portable electronic device including multiple applications, cause the portable electronic device to perform the wireless communication method provided by the present disclosure.

Optionally, the computer-readable storage medium may be applied to the first terminal device in embodiments of the present disclosure, and the computer program causes a computer to perform the corresponding processes implemented by the first terminal device in various methods of embodiments of the present disclosure, which is not repeated herein for the sake of brevity. Optionally, the computer-readable storage medium may be applied to the second terminal device in embodiments of the present disclosure, and the computer program causes a computer to perform the corresponding processes implemented by the second terminal device in various methods of embodiments of the present disclosure, which is not repeated herein for the sake of brevity.

Embodiments of the present disclosure also provide a computer program product, which includes a computer program. When executed by the computer, the computer program causes the computer to perform the wireless communication method provided by the present disclosure.

Optionally, the computer program product may be applied to the first terminal device in embodiments of the present disclosure, and the computer program causes a computer to perform the corresponding processes implemented by the first terminal device in various methods of embodiments of the present disclosure, which is not repeated herein for the sake of brevity. Optionally, the computer program product may be applied to the second terminal device in embodiments of the present disclosure, and the computer program causes a computer to perform the corresponding processes implemented by the second terminal device in various methods of embodiments of the present disclosure, which is not repeated herein for the sake of brevity.

Embodiments of the present disclosure also provide a computer program. When executed by the computer, the computer program causes the computer to perform the wireless communication method provided by the present disclosure.

Optionally, the computer program may be applied to the first terminal device in embodiments of the present disclosure, and when running on the computer, the computer program causes the computer to perform the corresponding processes implemented by the first terminal device in various methods of embodiments of the present disclosure, which is not repeated herein for the sake of brevity. Optionally, the computer program may be applied to the second terminal device in embodiments of the present disclosure, and when running on the computer, the computer program causes the computer to perform the corresponding processes implemented by the second terminal device in various methods of embodiments of the present disclosure, which is not repeated herein for the sake of brevity.

Embodiments of the present disclosure also provide a communication system, which may include the first terminal device and the second terminal device described above, and will not be repeated herein for the sake of brevity. It should be noted that the term "system" in the present disclosure may also be referred to as "network management architecture" or "network system", etc.

It should also be understood that the terms used in embodiments and the appended claims of the present disclosure are for the purpose of describing specific embodiments only and are not intended to limit embodiments of the present disclosure. For example, the singular forms of "an", "the", "above-mentioned", and "this" as used in embodiments and the appended claims of the present disclosure are also intended to include multiple forms, unless the context clearly represents otherwise.

Those skilled in the art will appreciate that the various example units and algorithm steps described in conjunction with embodiments disclosed in the present disclosure can be implemented in electronic hardware or a combination of computer software and electronic hardware. Whether these functions are performed in the hardware or software form depends on the specific application and design constraints of the technical solution. Those skilled in the art may use different methods for each particular application to implement the described function, but such implementation should not be considered beyond the scope of embodiments of the present disclosure. If implemented in the form of a software functional unit and sold or used as an independent product, it may be stored in a computer-readable storage medium. Based on such understanding, the technical solution of embodiments of the present disclosure, in essence or a part contributing to the prior art, or a part of the technical solution, may be embodied in the form of a software product. The computer program product is stored in a storage medium and includes several instructions for causing a computer device (which may be a personal computer, server, or network device, etc.) to perform all or part of the steps of the method of embodiments of the present disclosure. The aforementioned storage medium includes various mediums capable of storing program codes such as U disk, mobile hard disk, ROM, RAM, magnetic disk or optical disk.

Those skilled in the art will also appreciate that, for convenience and brevity of description, specific operating processes of the above-described systems, apparatuses, and units may refer to corresponding processes in the foregoing method embodiments, which will not be repeated herein. In several embodiments provided by the present disclosure, it should be understood that the disclosed systems, apparatuses and methods may be implemented in other ways. For example, the partition of units, modules or components in the above-described apparatus embodiments is only a logical functional partition, which may be implemented in another way, for example, multiple units, modules or components may be combined or integrated into another system, or some units, modules or components may be ignored or not performed. For another example, the units/modules/components described above as separation/display parts may or may not be physically separated, i.e. may be located in one place, or may be distributed over multiple network units. Some or all of the units/modules/components may be selected according to actual needs to achieve the object of embodiments of the present disclosure. Finally, it should be noted that the coupling, direct coupling or communication connection between each other shown or discussed above may be indirect coupling or communication connection through some interfaces, devices or units, and may be electrical, mechanical or other form.

The above contents are only the specific implementations of embodiments of the present disclosure, but the scope of protection of embodiments of the present disclosure is not limited thereto. Any changes or substitutions may be easily think of by those skilled familiar with the art within the technical scope disclosed by embodiments of the present disclosure, should be covered within the scope of protection of embodiments of the present disclosure. Therefore, the scope of protection of embodiments of the present disclosure shall be subject to the scope of protection of the claims.

## Claims

1. A method for wireless communication, comprising:
receiving a plurality of channel state information reference signals (CSI-RSs) using a plurality of spatial domain receiving filters respectively;
measuring the plurality of CSI-RSs to obtain measurement results of the plurality of CSI-RSs; and
determining, based on the measurement results of the plurality of CSI-RSs and from the plurality of spatial domain receiving filters, a target spatial domain receiving filter for a first terminal device to receive sidelink data.

2. The method of claim 1, wherein receiving the plurality of CSI-RSs using the plurality of spatial domain receiving filters respectively comprises:
respectively receiving, using the plurality of spatial domain receiving filters, the plurality of CSI-RSs sent by a second terminal device using a same spatial domain transmission filter.

3. The method of claim 1 or 2, further comprising:
sending first indication information to a second terminal device, wherein the first indication information indicates a number of the plurality of spatial domain receiving filters.

4. The method of claim 3, wherein the plurality of spatial domain receiving filters comprise at least one spatial domain receiving filter of the first terminal device operable for sidelink data reception.

5. The method of claim 3, wherein the first indication information is carried in at least one of the following:
sidelink control information (SCI);
a media access control control element (MAC CE); or
a PC5 radio resource control (RRC).

6. The method of claim 1 or 2, further comprising:
receiving second indication information sent by a second terminal device, wherein the second indication information indicates one of the following:
a maximum number of the CSI-RSs sent by the second terminal device; or
a maximum number of CSI-RS resources corresponding to the CSI-RSs sent by the second terminal device.

7. The method of claim 6, wherein the maximum number is greater than or equal to a number of the plurality of CSI-RSs.

8. The method of claim 6, wherein the second indication information indicating the maximum number of CSI-RS resources corresponding to the CSI-RSs sent by the second terminal device comprises: the second indication information indicates a number of all CSI-RS resources in a CSI-RS resource set corresponding to the CSI-RSs sent by the second terminal device.

9. The method of claim 6, wherein the second indication information is carried in at least one of the following:
sidelink control information (SCI);
a media access control control element (MAC CE); or
a PC5 radio resource control (RRC).

10. The method of any one of claims 1 to 9, further comprising:
receiving third indication information sent by a second terminal device, wherein the third indication information indicates at least one of the following:
at least one CSI-RS resource set corresponding to the plurality of CSI-RSs; or
a CSI-RS resource corresponding to the plurality of CSI-RSs in each of the at least one CSI-RS resource set.

11. The method of claim 10, wherein the third indication information comprises at least one of the following:
an identifier of the at least one CSI-RS resource set; or
an identifier of the CSI-RS resource corresponding to the plurality of CSI-RSs in each of the at least one CSI-RS resource set.

12. The method of claim 10, wherein a repetition parameter of the at least one CSI-RS resource set is set to on.

13. The method of claim 10, wherein a report quantity associated with the at least one CSI-RS resource set is set to none.

14. The method of claim 10, wherein the third indication information is carried in at least one of the following:
sidelink control information (SCI);
a media access control control element (MAC CE); or
a PC5 radio resource control (RRC).

15. The method of any one of claims 10 to 14, further comprising:
acquiring resource pool configuration information or sidelink bandwidth part (BWP) configuration information, wherein the resource pool configuration information or the BWP configuration information is used to configure at least one CSI-RS resource set or at least one CSI-RS resource; and
determining the at least one CSI-RS resource set based on the at least one CSI-RS resource set configured by the resource pool configuration information or the BWP configuration information.

16. The method of claim 15, wherein the at least one CSI-RS resource set configured by the resource pool configuration information or the BWP configuration information comprises a first CSI-RS resource set and a second CSI-RS resource set, a repetition parameter of the first CSI-RS resource set being set to off, and a repetition parameter of the second CSI-RS resource set being set to on; and the at least one CSI-RS resource set is determined according to the second CSI-RS resource set.

17. The method of claim 15, wherein the resource pool configuration information or the BWP configuration information comprises at least one of the following:
an identifier of the at least one CSI-RS resource set;
a repetition parameter of the at least one CSI-RS resource set;
an identifier of the at least one CSI-RS resource;
a CSI report quantity;
an identifier of CSI report configuration;
a number N of time domain symbols occupied by a CSI-RS resource, wherein N is an integer greater than or equal to 1;
information for determining time domain symbols for the at least one CSI-RS resource in a slot;
information for determining a location of a resource element (RE) or a sub-carrier of the at least one CSI-RS resource within a physical resource block (PRB);
a number of CSI-RS antenna ports; or
a CSI-RS density, indicating a number of REs occupied by a CSI-RS of an antenna port in a PRB.

18. The method of claim 17, wherein the CSI-RS density is less than 1, and the CSI-RS resource configuration information further comprises information indicating a PRB to which the at least one CSI-RS resource is mapped.

19. The method of any one of claims 1 to 18, further comprising:
receiving fourth indication information sent by a second terminal device, wherein the fourth indication information indicates one of the following:
the CSI-RSs sent by the second terminal device are used to measure channel state information;
the CSI-RSs sent by the second terminal device are used to determine a target spatial domain transmission filter for the second terminal device to transmit sidelink data; or
the CSI-RSs sent by the second terminal device are used for the first terminal device to determine the target spatial domain receiving filter.

20. The method of claim 19, wherein the fourth indication information indicating that the CSI-RSs sent by the second terminal device are used for the first terminal device to determine the target spatial domain receiving filter comprises:
the fourth indication information indicates at least one of the following:
the second terminal device sends CSI-RSs for the first terminal device to determine the target spatial domain receiving filter;
the second terminal device sends the plurality of CSI-RSs using a same spatial domain transmission filter;
a repetition parameter of a CSI-RS resource set corresponding to the CSI-RSs sent by the second terminal device is set to on; or
a report quantity associated with the CSI-RSs sent by the second terminal device is set to none.

21. The method of claim 20, wherein the fourth indication information is carried in at least one of the following:
sidelink control information (SCI);
a media access control control element (MAC CE); or
a PC5 radio resource control (RRC).

22. The method of any one of claims 1 to 21, comprising:
receiving fifth indication information sent by a second terminal device, wherein the fifth indication information indicates a delay boundary.

23. The method of claim 22, wherein receiving the plurality of CSI-RSs using the plurality of spatial domain receiving filters respectively comprises:
in response to exceeding the delay boundary, stopping receiving the plurality of CSI-RSs, wherein the measurement results of the plurality of CSI-RSs comprise at least one measurement result of at least one CSI-RS already received in the plurality of CSI-RSs.

24. The method of claim 22, wherein the fifth indication information is carried in at least one of the following:
sidelink control information (SCI);
a media access control control element (MAC CE); or
a PC5 radio resource control (RRC).

25. The method of any one of claims 1 to 24, further comprising:
receiving sixth indication information sent by a second terminal device, wherein the sixth indication information indicates a plurality of transmission resources corresponding to the plurality of CSI-RSs.

26. The method of claim 25, wherein receiving the plurality of CSI-RSs using the plurality of spatial domain receiving filters respectively comprises:
receiving the plurality of CSI-RSs on the plurality of transmission resources using the plurality of spatial domain receiving filters respectively.

27. The method of claim 25, wherein the plurality of transmission resources are acquired by the second terminal device through listening, or the plurality of transmission resources are acquired by the second terminal device from a network device.

28. The method of claim 25, wherein a priority corresponding to the plurality of CSI-RSs is a highest priority.

29. The method of claim 25, wherein one of the following applies:
the first terminal device expects the second terminal device to send the plurality of CSI-RSs using the plurality of transmission resources respectively;
the first terminal device does not expect the second terminal device to perform resource reselection on the plurality of transmission resources;
the second terminal device does not perform resource reselection on the plurality of transmission resources; or
the second terminal device does not perform re-evaluation detection and pre-emption detection on the plurality of transmission resources.

30. The method of claim 25, wherein the sixth indication information is carried in at least one of the following:
sidelink control information (SCI);
a media access control control element (MAC CE); or
a PC5 radio resource control (RRC).

31. The method of any one of claims 1 to 30, wherein determining, based on the measurement results of the plurality of CSI-RSs and from the plurality of spatial domain receiving filters, the target spatial domain receiving filter for the first terminal device to receive the sidelink data comprises:
determining at least one candidate spatial domain receiving filter from the plurality of spatial domain receiving filters based on the measurement results of the plurality of CSI-RSs; and
determining the target spatial domain receiving filter from the at least one candidate spatial domain receiving filter.

32. The method of claim 31, wherein determining the at least one candidate spatial domain receiving filter from the plurality of spatial domain receiving filters based on the measurement results of the plurality of CSI-RSs comprises:
determining at least one spatial domain receiving filter corresponding to at least one CSI-RS with a measurement result greater than or equal to a first threshold as the at least one candidate spatial domain receiving filter based on the measurement results of the plurality of CSI-RSs.

33. The method of claim 32, wherein one of the following applies:
the first threshold is configured by a network device;
the first threshold is indicated by a second terminal device; or
the first threshold is pre-configured.

34. The method of claim 31, wherein determining the target spatial domain receiving filter from the at least one candidate spatial domain receiving filter comprises:
determining, from the at least one candidate spatial domain receiving filter, a spatial domain receiving filter corresponding to a CSI-RS with an optimal measurement result as the target spatial domain receiving filter based on an order of at least one measurement result of the at least one candidate spatial domain receiving filter from high to low.

35. The method of any one of claims 1 to 34, wherein measuring the plurality of CSI-RSs to obtain the measurement results of the plurality of CSI-RSs comprises:
measuring the plurality of CSI-RSs to obtain layer-1 measurement results of the plurality of CSI-RSs.

36. The method of any one of claims 1 to 35, wherein the measurement results comprise at least one of sidelink reference signal receiving power (RSRP) or sidelink signal to interference-plus-noise ratio (SINR).

37. The method of any one of claims 1 to 36, further comprising:
receiving seventh indication information sent by a second terminal device, wherein the seventh indication information indicates a resource index corresponding to each received CSI-RS.

38. The method of claim 37, wherein receiving the seventh indication information sent by the second terminal device comprises:
receiving sidelink control information (SCI) sent by the second terminal device, wherein the SCI comprises the seventh indication information.

39. A method for wireless communication, comprising:
sending a plurality of channel state information reference signals (CSI-RSs) to a first terminal device respectively using a same spatial domain transmission filter,
wherein the plurality of CSI-RSs are used for the first terminal device to determine a target spatial domain receiving filter for sidelink data reception from a plurality of spatial domain receiving filters.

40. The method of claim 39, further comprising:
receiving first indication information sent by the first terminal device, wherein the first indication information indicates a number of the plurality of spatial domain receiving filters.

41. The method of claim 40, wherein the plurality of spatial domain receiving filters comprise at least one spatial domain receiving filter of the first terminal device operable for sidelink data reception.

42. The method of claim 40, wherein the first indication information is carried in at least one of the following:
sidelink control information (SCI);
a media access control control element (MAC CE); or
a PC5 radio resource control (RRC).

43. The method of claim 39, further comprising:
sending second indication information to the first terminal device, wherein the second indication information indicates one of the following:
a maximum number of the CSI-RSs sent by a second terminal device; or
a maximum number of CSI-RS resources corresponding to the CSI-RSs sent by the second terminal device.

44. The method of claim 43, wherein the maximum number is greater than or equal to a number of the plurality of CSI-RSs.

45. The method of claim 43, wherein the second indication information indicating the maximum number of CSI-RS resources corresponding to the CSI-RSs sent by the second terminal device comprises: the second indication information indicates a number of all CSI-RS resources in a CSI-RS resource set corresponding to the CSI-RSs sent by the second terminal device.

46. The method of claim 43, wherein the second indication information is carried in at least one of the following:
sidelink control information (SCI);
a media access control control element (MAC CE); or
a PC5 radio resource control (RRC).

47. The method of any one of claims 39 to 46, further comprising:
sending third indication information to the first terminal device, wherein the third indication information indicates at least one of the following:
at least one CSI-RS resource set corresponding to the plurality of CSI-RSs; or
a CSI-RS resource corresponding to the plurality of CSI-RSs in each of the at least one CSI-RS resource set.

48. The method of claim 47, wherein the third indication information comprises at least one of the following:
an identifier of the at least one CSI-RS resource set; or
an identifier of the CSI-RS resource corresponding to the plurality of CSI-RSs in each of the at least one CSI-RS resource set.

49. The method of claim 47, wherein a repetition parameter of the at least one CSI-RS resource set is set to on.

50. The method of claim 47, wherein a report quantity associated with the at least one CSI-RS resource set is set to none.

51. The method of claim 47, wherein the third indication information is carried in at least one of the following:
sidelink control information (SCI);
a media access control control element (MAC CE); or
a PC5 radio resource control (RRC).

52. The method of any one of claims 47 to 51, further comprising:
acquiring resource pool configuration information or sidelink bandwidth part (BWP) configuration information, wherein the resource pool configuration information or the BWP configuration information is used to configure at least one CSI-RS resource set or at least one CSI-RS resource; and
determining the at least one CSI-RS resource set based on the at least one CSI-RS resource set configured by the resource pool configuration information or the BWP configuration information.

53. The method of claim 52, wherein the at least one CSI-RS resource set configured by the resource pool configuration information or the BWP configuration information comprises a first CSI-RS resource set and a second CSI-RS resource set, a repetition parameter of the first CSI-RS resource set being set to off, and a repetition parameter of the second CSI-RS resource set being set to on; and the at least one CSI-RS resource set is determined according to the second CSI-RS resource set.

54. The method of claim 52, wherein the resource pool configuration information or the BWP configuration information comprises at least one of the following:
an identifier of the at least one CSI-RS resource set;
a repetition parameter of the at least one CSI-RS resource set;
an identifier of the at least one CSI-RS resource;
a CSI report quantity;
an identifier of CSI report configuration;
a number N of time domain symbols occupied by a CSI-RS resource, wherein N is an integer greater than or equal to 1;
information for determining time domain symbols for the at least one CSI-RS resource in a slot;
information for determining a location of a resource element (RE) or a sub-carrier of the at least one CSI-RS resource within a physical resource block (PRB);
a number of CSI-RS antenna ports; or
a CSI-RS density, indicating a number of REs occupied by a CSI-RS of an antenna port in a PRB.

55. The method of claim 54, wherein the CSI-RS density is less than 1, and the CSI-RS resource configuration information further comprises information indicating a PRB to which the at least one CSI-RS resource is mapped.

56. The method of any one of claims 39 to 55, further comprising:
sending fourth indication information to the first terminal device, wherein the fourth indication information indicates one of the following:
the CSI-RSs sent by the second terminal device are used to measure the channel state information;
the CSI-RSs sent by the second terminal device are used to determine a target spatial domain transmission filter for the second terminal device to transmit sidelink data; or
the CSI-RSs sent by the second terminal device are used for the first terminal device to determine the target spatial domain receiving filter.

57. The method of claim 56, wherein the fourth indication information indicating that the CSI-RSs sent by the second terminal device are used for the first terminal device to determine the target spatial domain receiving filter comprises:
the fourth indication information indicates at least one of the following:
the second terminal device sends CSI-RSs for the first terminal device to determine the target spatial domain receiving filter;
the second terminal device sends the plurality of CSI-RSs using a same spatial domain transmission filter;
a repetition parameter of a CSI-RS resource set corresponding to the CSI-RSs sent by the second terminal device is set to on; or
a report quantity associated with the CSI-RSs sent by the second terminal device is set to none.

58. The method of claim 57, wherein the fourth indication information is carried in at least one of the following:
sidelink control information (SCI);
a media access control control element (MAC CE); or
a PC5 radio resource control (RRC).

59. The method of any one of claims 39 to 58, comprising:
sending fifth indication information to the first terminal device, wherein the fifth indication information indicates a delay boundary.

60. The method of claim 59, wherein sending the plurality of CSI-RSs to the first terminal device respectively using the same spatial domain transmission filter comprises:
in response to exceeding the delay boundary, stopping sending the plurality of CSI-RSs.

61. The method of claim 59, wherein the fifth indication information is carried in at least one of the following:
sidelink control information (SCI);
a media access control control element (MAC CE); or
a PC5 radio resource control (RRC).

62. The method of any one of claims 39 to 61, further comprising:
sending sixth indication information to the first terminal device, wherein the sixth indication information indicates a plurality of transmission resources corresponding to the plurality of CSI-RSs.

63. The method of claim 62, wherein sending the plurality of CSI-RSs to the first terminal device respectively using the same spatial domain transmission filter comprises:
sending the plurality of CSI-RSs on the plurality of transmission resources using the same spatial domain transmission filter.

64. The method of claim 62, wherein the plurality of transmission resources are acquired by the second terminal device through listening, or the plurality of transmission resources are acquired by the second terminal device from a network device.

65. The method of claim 62, wherein a priority corresponding to the plurality of CSI-RSs is a highest priority.

66. The method of claim 62, wherein one of the following applies:
the first terminal device expects a second terminal device to send the plurality of CSI-RSs using the plurality of transmission resources respectively;
the first terminal device does not expect a second terminal device to perform resource reselection on the plurality of transmission resources;
a second terminal device does not perform resource reselection on the plurality of transmission resources; or
a second terminal device does not perform re-evaluation detection and pre-emption detection on the plurality of transmission resources.

67. The method of claim 62, wherein the sixth indication information is carried in at least one of the following:
sidelink control information (SCI);
a media access control control element (MAC CE); or
a PC5 radio resource control (RRC).

68. The method of any one of claims 39 to 67, further comprising:
sending seventh indication information to the first terminal device, wherein the seventh indication information indicates a resource index corresponding to each sent CSI-RS.

69. The method of claim 68, wherein sending the seventh indication information to the first terminal device comprises:
sending sidelink control information (SCI) to the first terminal device, wherein the SCI comprises the seventh indication information.

70. A first terminal device, comprising:
a receiving unit, configured to receive a plurality of channel state information reference signals (CSI-RSs) using a plurality of spatial domain receiving filters respectively; and
a processing unit, configured to:
measure the plurality of CSI-RSs to obtain measurement results of the plurality of CSI-RSs; and
determine, based on the measurement results of the plurality of CSI-RSs and form the plurality of spatial domain receiving filters, a target spatial domain receiving filter for the first terminal device to receive sidelink data.

71. A second terminal device, comprising:
a sending unit, configured to send a plurality of channel state information reference signals (CSI-RSs) to a first terminal device respectively using a same spatial domain transmission filter,
wherein the plurality of CSI-RSs are used for the first terminal device to determine a target spatial domain receiving filter for sidelink data reception from a plurality of spatial domain receiving filters.

72. A terminal device, comprising:
a memory, configured to store a computer program; and
a processor, configured to invoke and run the computer program stored in the memory to perform the method of any one of claims 1 to 38.

73. A network device, comprising:
a memory, configured to store a computer program; and
a processor, configured to invoke and run the computer program stored in the memory to perform the method of any one of claims 39 to 69.

74. A chip, comprising:
a processor, configured to invoke and run a computer program from a memory, causing a device on which the chip is installed to perform the method of any one of claims 1 to 38 or the method of any one of claims 39 to 69.

75. A computer-readable storage medium having stored therein a computer program which, when executed by a computer, causes the computer to perform:
the method of any one of claims 1 to 38; or
the method of any one of claims 39 to 69.

76. A computer program product, comprising computer program instructions, causing a computer to perform the method of any one of claims 1 to 38 or the method of any one of claims 39 to 69.

77. A computer program, causing a computer to perform the method of any one of claims 1 to 38 or the method of any one of claims 39 to 69.
